# EUROPÄISCHE PATENTANMELDUNG

(11) **EP 2 623 200 A2**
(43) Veröffentlichungstag der Anmeldung: **07.08.2013**
(21) Anmeldenummer: 13152693.1
(22) Anmeldetag: 01.02.2005
(51) Int. Cl.: B01L 3/00, B81B 1/00, F16K 99/00

(54) **Mikrostrukturierte Plattform und Verfahren zum Handhaben einer Fluessigkeit**

(30) Priorität: 17.02.2004 DE 102004007567
(62) Teilanmeldung aus: 05002008.0
(71) Anmelder: Boehringer Ingelheim microParts GmbH, 44227 Dortmund (DE)
(72) Erfinder: BLANKENSTEIN, Gert, 55216 INGELHEIM AM RHEIN (DE); MARQUORDT, Claus, 55216 INGELHEIM AM RHEIN (DE); BARTOS, Holger, 55216 INGELHEIM AM RHEIN (DE); WILLMS, Thomas, 55216 Ingelheim am Rhein (DE); PETERS, Ralf-Peter, 55216 Ingelheim am Rhein (DE)
(74) Vertreter: Simon, Elke Anna Maria

(57) **Zusammenfassung**

Für die Untersuchung von Flüssigkeiten in der Biologie, Biochemie, Chemie, Medizin und Pharmazie werden Verfahren angewendet, die mit erheblichem Aufwand für das Handhaben der Flüssigkeiten und für Hilfsmittel verbunden sind, und die eine Mindestmenge an Flüssigkeit benötigen. Die mikrostrukturierte Plattform enthält Hohlräume und Kapillaren, in denen die Flüssigkeit durch Kapillarkraft transportiert wird.

Plattform zum Handhaben einer benetzenden Flüssigkeit, die auf einem mikrostrukturierten Träger- Hohlräume und ein Kanalsystem zum Transport der Flüssigkeit umfasst, das mit mindestens einem Einlass und mit mindestens einem Auslass versehen ist, und der Querschnitt der Kanäle abschnittsweise in Größe und Form unterschiedlich ist, und - die Kanäle als Kapillaren ausgebildet sind, die in mindestens einer Richtung quer zur Transportrichtung der Flüssigkeit mindestens abschnittsweise eine Abmessung im Millimeterbereich und darunter haben, und - die Wände der Mikrostrukturen zumindest bereichsweise benetzbar sind, - wobei die Plattform folgende weitere mikrostrukturierte Elemente umfasst, die im Transportweg der Flüssigkeit angeordnet sind:. einen fluidischen Schalter mit einem Kapillarstopp am Übergang einer engeren Kapillare in eine erweiterte Kapillare, und mit einer Steuerkapillare, die an den Kapillarstopp angeschlossen ist, und . eine Abtrennvorrichtung für einen Flüssigkeitsteilstrom aus einer Dispersion, wobei diese Abtrennvorrichtung einen Kapillarspalt aufweist, der seitlich an einen Kanal angeschlossen ist.

## Beschreibung

Die Erfindung betrifft eine mikrostrukturierte Plattform und ein Verfahren zum Handhaben einer Flüssigkeit bei physikalischen, physiko-chemischen, chemischen, biochemischen oder biologischen Untersuchungen.

Die mikrostrukturierte Plattform enthält nach Lage, Form und Größe definierte Strukturelemente mit Abmessungen im Mikrometerbereich, die planmäßig in die Plattform eingebracht worden sind, und die sich von der Rauheit der Oberfläche des Plattformmaterials eindeutig abheben.

Die Flüssigkeit kann zum Beispiel mittels eines Mikroskops auf optische Eigenschaften und deren Veränderung im infraroten, im sichtbaren oder im ultravioletten Spektralbereich untersucht werden. Bei chemischen Untersuchungen kann die Flüssigkeit mit anderen Stoffen reagieren, wodurch Eigenschaften der Flüssigkeit erkennbar verändert werden. Bei einer derartigen Reaktion kann zum Beispiel die Fluoreszenz der Flüssigkeit verändert werden. Eine fluoreszierende Flüssigkeit kann ihre Fluoreszenz teilweise oder völlig verlieren. Eine nicht fluoreszierende Flüssigkeit kann fluoreszierend werden. Aus derartigen und anderen Veränderungen kann auf Eigenschaften der untersuchten Flüssigkeit geschlossen werden. Weiter können aus einer Flüssigkeit, die Partikel enthält, diese Partikel abgetrennt werden, oder ein Teil der Flüssigkeit wird abgetrennt.

Die Erfindung bezweckt, die Handhabung von Flüssigkeiten zu erleichtern oder zu ermöglichen, bevorzugt wenn nur eine sehr geringe Menge an Flüssigkeit im Bereich von Mikrolitern vorliegt und damit umfangreiche Untersuchungen, die qualitativ, halb-quantitativ oder quantitativ sein können, durchzuführen sind.

Bei einer Vielzahl chemischer und biochemischer Untersuchungen von Flüssigkeiten ist es erforderlich, die vorgelegte Flüssigkeit unter vorgegebenen reproduzierbaren Bedingungen zu behandeln. Dazu gehören zum Beispiel die Dosierung der Probe und die Steuerung der Untersuchungsdurchführung nach zeitlichen oder kinetischen Gesichtspunkten. Es kann erforderlich sein, einen Teil der Flüssigkeit aus der vorgelegten Probe abzutrennen und danach den einen oder den anderen Teil der Flüssigkeit weiter zu behandeln. Weiter kann eine definierte Menge der Probe für eine vorgegebene Zeitspanne mit einem Reagenz in Kontakt zu bringen sein.

Bei den herkömmlichen Verfahren werden für Dosier- und Steuervorgänge Ventile verwendet, die zum Beispiel mittels eines Rechnerprogramms gesteuert werden. Hierfür ist ein erheblicher apparativer Aufwand erforderlich. Die herkömmlichen Vorrichtungen können nur in einem begrenzten Ausmaß miniaturisiert werden. Es ist schwierig, mit den herkömmlichen Vorrichtungenumfangreiche Untersuchungen an Flüssigkeiten durchzuführen, von denen nur eine geringe Menge verfügbar ist.

Es ist wünschenswert, für chemische und biochemische Untersuchungen Vorrichtungen zu benutzen, die für flüssige Proben geeignet sind, von denen nur eine geringe Menge vorliegt. Der Bedarf an solchen Vorrichtungen ist besonders groß, wenn für eine Vielzahl von Proben bestimmte Untersuchungen routinemäßig nach einem vorgegebenen Verfahren durchzuführen sind, und wenn jede Vorrichtung aus hygienischen Gründen nur einmal benutzt werden darf. Es ist weiter wünschenswert, Vorrichtungen verwenden zu können, deren Aufbau an unterschiedliche Untersuchungsaufgaben angepaßt werden kann, und die sich mit hoher Präzision in großer Stückzahl zu annehmbaren Kosten herstellen lassen.

In DE - 198 10 499 ist eine Mikrotiterplatte angegeben, die bei der mikrobiologischen Untersuchung von Flüssigkeiten eingesetzt wird. Diese Mikrotiterplatte ist eine Weiterentwicklung der bisher verwendeten Platten. Die Verteilung der Probenkammern ist an die Befüll- und Auswertegeräte angepasst. Die Mikrotiterplatte ist auf beiden Seiten verschlossen. Gruppen von Probenkammern sind über Zuleitungskanäle und Verbindungskanäle mit jeweils einer Einfüllstelle verbunden. An den Probenkammern sind Entlüftungsbereiche vorhanden, die gruppenweise an Entiüftungskanäle angeschlossen sind und mit einer Entlüftungsöffnung verbunden sind. In jeder Probenkammer stellt sich die Füllmenge der Flüssigkeit von selbst ein, wodurch das Füllen der Probenkammern mit der zu untersuchenden Flüssigkeit erleichtert wird. Die Mikrotiterplatte ist für verschiedene optische Untersuchungsverfahren geeignet.

In WO - 99/46045 ist ein Probenträger als Weiterentwicklung der Mikrotiterplatte nach DE - 198 10 499 angegeben. Der Probenträger umfasst mindestens eine Einfüllkammer für die zu untersuchende Flüssigkeit, mindestens eine Reaktionskammer mit einem Zulaufkanal sowie mindestens einen Verteilerkanal, der eine Einfüllkammer mit mehreren Zulaufkanälen verbindet. Jede Reaktionskammer ist mit einer Entlüftungsöffnung versehen. Die Zulaufkanäle und die Verteilerkanäle sind als Kapillaren ausgebildet, in denen die Flüssigkeit durch die Kapillarkraft transportiert wird. An der Mündung jedes Zulaufkanals in eine Reaktionskammer ist ein Bereich mit einem sehr kleinen Rundungsradius vorhanden, in dem die Kapillarkraft größer ist als im Zulaufkanal. Ein derartiger Bereich ermöglicht der Flüssigkeit, aus dem Zulaufkanal in die Reaktionskammer zu strömen. Jede Reaktionskammer ist mit einer Entlüftungsöffnung versehen, an die sich ein Verbindungskanal mit kapillaren Abmessungen anschließt. Mehrere Verbindungskanäle münden in einen Entlüftungssammelkanal, der eine Entlüftungsöffnung hat. Bevorzugt an dem Ende jedes Verbindungskanals, an dem der Verbindungskanal in den Entlüftungssammelkanal mündet, kann der Querschnitt des Verbindungskanals sprunghaft größer werden, wodurch die Strömung der aus der Reaktionskammer kommenden Flüssigkeit über diese Stelle hinaus verhindert wird.

Der Probenträger kann Ventile oder Bereiche mit Ventilwirkung enthalten, mit denen der Strom der Probenfüssigkeit in die Reaktionskammern von außen gesteuert werden kann. Ein Ventil kann aus einer Berstrolie bestehen. Ein Bereich mit Ventilwirkung kann eine sprunghafte Aufweitung eines Kanals mit kapillaren Abmessungen oder ein Kanalabschnitt mit hydrophober Wand sein. Ein Ventil oder ein Bereich mit Ventilwirkung kann durch Anlegen eines Überdruckes oder eines Unterdruckes von dem Sperrzustand in den Durchlasszustand umgeschaltet werden. Weiter kann in jede Kanalaulweitung ein Kanal mit kapillaren Abmessungen münden, über den die Kanalaulweitung mit einer Steuerflüssigkeit gefüllt werden kann, wodurch der Bereich mit Ventilwirkung überbrückt wird.

Zum Überwinden eines Bereiches mit Ventilwirkung mittels eines Druckunterschiedes sind auβerhalb des mikrostrukturierten Bereiches durchzufuhrende Manipulationen erfordenlich.

Aus EP - 1 013 341 ist eine Vorrichtung zum Ableiten einer Flüssigkeit aus Kapillaren bekannt. Zum Abtrennen von flüssigen Komponenten aus einer Flüssigkeit werden Trennvorrichtungen, wie Filter und Membranen, verwendet, in denen die Kapillarkraft wirksam ist, die die abzutrennende flüssige Komponente in der Trennvorrichtung zurückhält. Liegt nur eine geringe Flüssigkeitsmenge vor, kann es schwierig sein, die abzutrennende flüssige Komponente in freier und unveränderter Form aus der Trennvorrichtung zu entnehmen.

Dieser Verfahrensschritt wird erleichtert oder ermöglicht durch eine keilförmige Aussparung am Austrittsende der Kapillare oder in einem säulenförmigen Körper, der das Austrittsende der Kapillare berührt. Der Krümmungsradius der Keilkante ist kleiner als der Radius der Kapillare. An der Grundseite der keilförmigen Aussparung schließt sich ein Sammelraum an, in dem die abgetrennte flüssige Komponente gesammelt wird, und in dem die Kapillarkraft kleiner ist als in der Kapillare.

Die keilförmige Aussparung übt auf die an der keilförmigen Aussparung anstehende benetzende Flüssigkeit eine Saugwirkung aus. Die Saugwirkung beginnt und dauert an, sobald und so lange am Anfang der keilförmigen Aussparung Flüssigkeit ansteht, und so lange der Sammelraum in der Umgebung der keilförmigen Aussparung nur auf seinem Boden mit einer Flüssigkeitsschicht bedeckt ist. Die Saugwirkung beginnt von selbst und ist von außen nicht beeinflußbar.

Diese Vorrichtung ermöglicht das Abtrennen von flüssigen Komponenten im Mikroliterbereich. Sie kann verwendet werden zum Abtrennen einer Flüssigkeit aus einem feststoffhaltigen Medium mittels einer Filtermembran, zum Abtrennen von Blutplasma aus Vollblut mittels einer Trennmembran oder zum Befüllen eines Hohlraumes über eine Zuleitungskapillare.

In EP - 1 201 304 ist eine mikrostrukturierte Plattform ("Mikrochip") zum Untersuchen einer Flüssigkeit angegeben. Der Mikrochip enthält einen Füllbereich und einen Untersuchungsbereich und gegebenenfalls einen Sammelbereich für die Flüssigkeit, die aus dem Untersuchungsbereich austritt, sowie ein System von kapillarförmigen Kanälen. Weiter kann der Mikrochip eine oder mehrere fluidische Strukturen enthalten, wie eine Schmetterlingsstruktur, eine Kaskadenstruktur, eine Gabelungsstruktur, eine Verzögerungsstruktur für die voreilende Randströmung, eine auf der Kapillarkraft beruhende Struktur, mit der die Flüssigkeitsströmung angehalten werden kann. Derartige fluidische Strukturen ermöglichen einerseits die gleichmäßige Verbreiterung des Flüssigkeitsstromes, der aus einer (schmale) Kapillare (Kapillarkanal) mit kapillaren Abmessungen in beiden Richtungen quer zur Strömungsrichtung übertritt in eine (breite) Kapillare (Kapillarspalt) mit einer kapillaren Abmessung in nur einer Richtung quer zur Strömungsrichtung. Dadurch erhält die Flüssigkeit beim Übergang in eine breite Kapillare ein bei speziellen Untersuchungen verlangtes homogenes Strömungsprofil. Andererseits ermöglichen derartige Strukturen, einen Flüssigkeitsstrom, der aus einer breiten Kapillare in eine enge Kapillare übertritt, gleichförmig zusammenzuführen.

Dieser Mikroschip ist geeignet für Anwendungen und Untersuchungen von Flüssigkeiten, die Biomoleküle enthalten, wie Nukleinsäuren und Peptide.

In WO - 02/097398 wird einem geschlossene Plattform zum Untersuchen von Biomolekülen beschrieben. Die Plattform enthält fluidische Mikrostrukturen wie Schmetterlingsstrukturen, Gabelungsstrukturen und Verzögerungsstrukturen. Diese Plattform kann für Untersuchungen verwendet werden, die bisher auf einem Objektträger unter einem Mikroskop durchgeführt werden. Die Plattform gestattet, die bei derartigen Untersuchungen bisher benutzten Instrumente zum Manipulieren und Auswerten zu verwenden. Sie wird beispielsweise für das kovalente Immobilisieren von Polypeptiden und Nukleinsäuren eingesetzt.

Bei naßchemischen, biochemischen und diagnostischen Analysen sind dosierte Teilmengen einer Flüssigkeit von einer größeren Flüssigkeitsmenge zu trennen. Dazu werden Hohlräume mit definiertem Volumen mit einer Flüssigkeitsmenge gefüllt. Zum Trennen der dosierten Flüssigkeitsmenge von der größeren Flüssigkeitsmenge werden mechanische Trennelemente verwendet. Bei anderen Verfahren wird die Flüssigkeitsmenge, die über das definierte Volumen eines Hohlraume hinausgeht, abgesaugt, womit die dosierte Flüssigkeitsmenge erhalten wird. Weiter kann die Flüssigkeitsmenge, die die dosierte Flüssigkeitsmenge übersteigt, mittels eines Druckstoßes "weggeblasen" werden. Weiter kann eine Flüssigkeitsmenge durch Ansaugen oder Einblasen dosiert werden. Für derartige Dosier- und Trennverfahren sind Mittel zum Erzeugen eines Druckes erforderlich.

Bei einer Plattform zum Handhaben einer Flüssigkeit kann es erforderlich sein, eine begrenzte Flüssigkeitsmenge im Mikroliterbereich an einer vorgegebenen Stelle auf der glatten Oberfläche eines festen Körpers aufzubringen und an der vorgegebenen Stelle zusammenzuhalten. Das Auseinanderlaufen der Flüssigkeit soll unterbunden werden. Diese Forderung kann man erfüllen, wenn die Benetzbarkeit der Oberfläche des Körpers an der vorgegebenen Stelle größer ist als in der auf gleicher Höhe liegenden Umgebung dieser Stelle. Entweder kann die Benetzbarkeit der vorgegebenen Stelle erhöht werden, oder die Benetzbarkeit der Umgebung der vorgegebenen Stelle kann erniedrigt werden. Dazu kann die Oberfläche des Körpers nach bekannten Verfahren zum Beispiel bereichsweise beschichtet werden, oder sie kann bereichsweise mit einer unterschiedlichen Rauheit versehen werden. Bei beiden Verfahren sind zusätzliche Verfahrensschritte bei der Herstellung der Plattform erforderlich. Es kann weiter wünschenswert sein, die Menge der an einer Stelle zusammenzuhaltenden Flüssigkeit größer zu machen als die Menge, die auf einer relativ zur Umgebung hydrophileren Fläche zusammengehalten werden kann.

Damit stellt sich die Aufgabe, die bekannten mikrostrukiurierten Plattformen weiter zu entwickeln und eine Plattform und ein Verfahren zum Handhaben einer benetzenden Flüssigkeit anzugeben, die gegebenenfalls nur in einer Menge im Mikroliterbereich vorliegt. Die Wände der Mikrostrukturen sind zumindest in den Bereichen von der Flüssigkeit benetzbar, die von der Flüssigkeit berührt werden. Während der Handhabung soll ein nur geringer apparativer Aufwand erforderlich sein. Die Flüssigkeit soll einfach, sicher und reproduzierbar gehandhabt werden können. Die Plattform soll an unterschiedliche Untersuchungen anpassbar sein, auch an mehrstufige Untersuchungen, die mehrere sequentielle Verfahrensschritte umfassen. Mehrere Verfahrensschritte sollen nacheinander und mehrere Ketten derartiger Verfahrensschritte sollen auf einer Plattform auf mehreren Wegen nebeneinander und annähernd gleichzeitig ablaufen können, und zwar in beiden Fällen weitgehend ohne Eingreifen von außen. Weiter sollen unterschiedlich aufgebaute Ketten von Verfahrensschritten auf einer Plattform nebeneinander und etwa gleichzeitig ablaufen können. Die Plattform soll für einmaligen Gebrauch geeignet sein und in großer Stückzahl wirtschaftlich herstellbar sein.

Diese Aufgabe wird erfindungsgemäß gelöst durch eine mikrostrukturierte Plattform zum Handhaben einer benetzenden Flüssigkeit, die auf einem mikrostrukturierten Träger
- Hohlräume und ein Kanalsystem zum Transport der Flüssigkeit umfasst, das mit mindestens einem Einlass und mit mindestens einem Auslass versehen ist, und der Querschnitt der Kanäle abschnittsweise in Größe und Form unterschiedlich ist, und
- die Kanäle als Kapillaren ausgebildet sind, die in mindestens einer Richtung quer zur Transportrichtung der Flüssigkeit mindestens abschnittsweise eine Abmessung im Millimeterbereich und darunter haben, bevorzugt von 5 Millimeter bis 0,5 Mikrometer, und
- die Wände der Mikrostrukturen zumindest bereichsweise benetzbar sind, wobei die Plattform
   - mindestens ein weiteres mikrostrukturiertes Element umfasst, das im Transportweg der Flüssigkeit angeordnet ist, aus der Gruppe der mikrostrukturierten Elemente
   - fluidischer Schalter mit einem Kapillarstopp zum Anhalten und Ingangsetzen eines Flüssigkeitsstromes in der Kapillare am Übergang einer engeren Kapillare in eine erweiterte Kapillare, und mit einer Steuerkapillare, die an den Kapillarstopp angeschlossen ist,
   - Dosiereinrichtung für die zu handhabende Flüssigkeit mit einem Kapillarstopp und mit einer im wesentlichen T-förmigen Verzweigung, an der die Flüssigkeitszufuhr abreisst, sowie mit einem Raum, der die dosierte Flüssigkeitsmenge aufnimmt, und der zwischen Kapillarstopp und Verzweigung angeordnet ist,
   - Abtrennvorrichtung für einen Flüssigkeitsteilstrom aus einer Dispersion mit einem Kapillarspalt, der seitlich an einen Kanal angeschlossen ist, durch den die Dispersion strömt,
   - Bereich zum Zusammenhalten einer begrenzten Flüssigkeitsmenge, der Mikrostrukturen enthält, die im wesentlichen senkrecht auf dem Boden des Bereiches stehen, und zweischen denen sich Zwischenräume befinden mit Abmessungen zwischen den Mikrostrukturen - parallel zum Boden des Bereiches - die im Mikrometerbereich liegen.

Die erfindungsgemäße Plattform zum Handhaben einer Flüssigkeit mit mikrostrukturierten Elementen, die im Transportweg der Flüssigkeit angeordnet sind, enthält ein System von Kanälen als längliche Hohlräume sowie andere Hohlräume in einem festen Körper.

Die Abmessungen der Kanäle liegen in mindestens einer Richtung quer zur Transportrichtung der Flüssigkeit im Millimeterbereich und darunter. Die "kapillaren Abmessungen" quer zur Transportrichtung der Flüssigkeit betragen beispielsweise von 10 Mikrometer bis 1000 Mikrometer, bevorzugt von 50 Mikrometer bis 400 Mikrometer. Die Länge der Kanäle kann mehrere Zentimeter betragen, beispielsweise von 2 Millimeter bis 50 Millimeter, bevorzugt von 5 Millimeter bis 10 Millimeter. Derartige Kanäle werden im folgenden als Kapillaren bezeichnet.

Das Volumen der anderen Hohlräume beträgt beispielsweise von 1 Mikroliter bis 1000 Mikroliter, bevorzugt von 2 Mikroliter bis 200 Mikroliter, und für Mikroanalysen von 2 Mikroliter bis 50 Mikroliter.

Die Abmessungen der Kapillaren können in zwei (aufeinander senkrecht stehenden) Richtungen quer zum Transportweg der Flüssigkeit etwa gleich groß sein. Solche Kapillaren sind rohrförmig.

Kapillaren, die in einer Richtung quer zur Transportrichtung der Flüssigkeit eine "kapillare Abmessung" haben, und die in einer anderen Richtung quer zur Transportrichtung der Flüssigkeit eine Abmessung haben, die größer als die "kapillare Abmessung" ist, werden als Kapillarspalte bezeichnet.

Eine Kapillare kann in Längsrichtung gerade sein oder weitgehend beliebig gebogen sein. Die Kapillare kann fast beliebig lang sein. Der Kapillarquerschnitt kann weitgehend beliebig geformt sein.

Eine rohrförmige Kapillare kann einen kreisrunden Querschnitt oder einen runden Querschnitt mit fast beliebiger anderer Form (zum Beispiel einen elliptischen Querschnitt) haben. Weiter kann der Querschnitt die Form eines beliebigen regelmässigen oder unregelmässigen Vielecks haben. Der Querschnitt kann rechteckig oder quadratisch sein, bei einem rechteckigen Querschnitt liegen die Seitenlängen des Rechtecks in derselben Grössenordnung. Auch dreieckige Querschnitte in Form eines gleichseitigen Dreiecks oder eines beliebigen Dreiecks sind möglich. Weiter kann der Rand des Querschnitts einer Kapillare bereichsweise gerade und bereichsweise gekrümmt sein, wobei die Krümmung konvex oder konkav sein kann.

Bei nicht-runden Querschnitten können die kanten in der Kapillare eine Krümmung haben, die in einem weiten Bereich schwanken kann oder gewählt werden kann.

Die erfindungsgemäße Plattform kann offen (nicht gedeckelt) sein, das heißt alle Kapillaren und Hohlräume sind auf ihrer Oberseite offen. In der bevorzugten Ausführung ist die Plattform zumindest bereichsweise gedeckelt.

Eine Flüssigkeit unterliegt in einer Kapillare im wesentlichen der Kapillarkraft und der Oberflächenspannung, die das Verhalten der Flüssigkeit innerhalb der Kapillare bestimmen. Eine benetzende Flüssigkeit wird innerhalb der Kapillaren durch Kapillarkraft transportiert.

Eine Kapillare kann einen Kapillarsprung enthalten, an dem sich der Querschnitt der Kapillare auf ihrem gesamten Umfang oder auf dem größten Teil ihres Umfanges sprunghaft ändert. Auf der einen Seite des Kapillarsprunges befindet sich die (relativ) engere Kapillare und auf der anderen Seite die (relativ) erweiterte Kapillare.

Liegt die erweiterte Kapillare stromabwärts der engeren Kapillare und wird der Kapillarsprung von einer Flüssigkeit in der engeren Kapillare angeströmt, wird die Flüssigkeit in der engeren Kapillare am Kapillarsprung angehalten. In dieser Strömungsrichtung wirkt der Kapillarsprung als Kapillarstopp.

Liegt die engere Kapillare stromabwärts der erweiterten Kapillare und wird der Kapillarsprung von einer Flüssigkeit in der erweiterten Kapillare angestömt, wird die Flüssigkeit in der erweiterten Kapillare am Kapillarsprung nicht angehalten. In dieser Strömungsrichtung wirkt der Kapillarsprung nicht als Kapillarstopp.

Es ist am günstigsten, wenn am Kapillarsprung die engere Kapillare auf ihrem gesamten Umfang in die erweiterte Kapillare übergeht. Falls diese Forderung nur mit Aufwand realisierbar ist, genügt es erfahrungsgemäß, wenn die engere Kapillare auf dem größten Teil ihres Umfanges in die erweiterte Kapillare übergeht. Kapillaren mit quadratischem Querschnitt können zum Beispiel in einer Platte als Gräben vorliegen. Am Kapillarsprung geht die engere Kapillare in die erweiterte Kapillare über, die tiefer und breiter ist als die engere Kapillare. Der Kapillarsprung erstreckt sich in diesem Fall über drei Viertel des Umfanges der engeren Kapillare.

In ihrer ersten Ausführung kann die erfindungsgemäße Plattform mindestens eine Dosiereinrichtung für mindestens eine Teilmenge der zu handhabenden Flüssigkeit und zum Trennen der Teilmenge von einer größeren Flüssigkeitsmenge sowie mindestens einen fluidischen Schalter umfassen. Sie kann weiter einen ersten Hohlraum als Einlass für die zu handhabende Flüssigkeit und einen zweiten Hohlraum als Auslass umfassen. Der Auslass ist mit dem Einlass durch eine erste Kapillare verbunden. Die Kapillarkraft am Auslass der ersten Kapillare kann gleich oder größer als die Kapillarkraft am Einlass der ersten Kapillare sein. Von der ersten Kapillare zweigt mindestens eine zweite Kapillare ab, deren Abmessung in mindestens einer Richtung quer zur Transportrichtung der Flüssigkeit in der zweiten Kapillare mindestens an der Abzweigstelle kleiner ist als die kleinste Abmessung der ersten Kapillare quer zur Transportrichtung der Flüssigkeit in der ersten Kapillare. An der Abzweigstelle ändern sich die geometrischen Eigenschaften beim Übergang von der ersten in eine der zweiten Kapillaren sprunghaft Die Kapillarkraft am Einlass in die mindestens eine zweite Kapillare ist größer als die Kapillarkraft in der ersten Kapillare im Bereich der Abzweigstelle. Das vorgegebene Volumen jeder zweiten Kapillare kann für alle zweiten Kapillaren gleich groß oder unterschiedlich groß sein.

Die Abzweigstelle der zweiten Kapillare aus der ersten Kapillare ist im wesentlichen T-förmig ausgebildet. Die zweite Kapillare zweigt aus einem im wesentlichen geraden Stück der ersten Kapillare annähernd senkrecht ab.

Die zweite Kapillare enthält einem Kapillarsprung, an dem sie auf ihrem gesamten Umfang oder auf dem größten Teil ihres Umfanges sprunghaft in eine "erweiterte Kapillare" übergeht. Die zweite Kapillare wird stromaufwärts des Kapillarsprunges als "engere Kapillare" bezeichnet. Dieser Kapillarsprung wirkt als geometrischer Kapillarstopp für die Flüssigkeit in der engeren Kapillare. Die Querschnittsfläche der erweiterten Kapillare ist mindestens um 10 % größer als die Querschnittsfläche der engeren Kapillare. Bei Flüssigkeiten mit relativ kleiner Oberflächenspannung ist ein größerer Kapillarsprung erforderlich.

In die erweiterte Kapillare mündet eine Steuerkapillare, durch die eine Steuerflüssigkeit an den Kapillarstopp herangeführt wird. Die Steuerkapillare kann an ihrem Ende ohne Kapillarsprung auf dem größten Teil ihres Umfanges in die erweiterte Kapillare übergehen. Falls sich am Ende der Steuerkapillare ein Kapillarsprung befindet, ist in der Wand des Kapillarsprungs eine keilförmige Aussparung vorhanden, die vom Boden der Steuerkapillare bis zum Boden der erweiterten Kapillare reichen kann. In beiden Ausführungen strömt die Flüssigkeit aus der Steuerkapillare ohne Verzögerung in die erweiterte Kapillare und füllt die erweiterte Kapillare im Bereich des Kapillarsprunges. Sobald die Flüssigkeit aus der Steuerkapillare die in der zweiten (engeren) Kapillare am Kapillarstopp angehaltenen Flüssigkeit beruht, wird der fluidische Schalter geöffnet, und die Flüssigkeit in der zweiten (engeren) Kapillare wird in die erweiterte Kapillare weitertransportiert.

Die Steuerkapillare kann an einer geeigneten Stelle aus der zweiten Kapillare abzweigen. Weiter kann sie an einen mit Flüssigkeit gefüllten Hohlraum auf der Plattform angeschlossen sein. Auf einer Plattform mit vielen Strukturelementen kann die Steuerkapillare an einer anderen Kapillare oder an einer Stelle (Hohlraum oder Kapillare) angeschlossen sein. Der Anfang der Steuerkapillare kann - über mehrere Strukturelemente hinweg - entfernt liegen von ihrem Ende, an dem sie an die erweiterte Kapillare angeschlossen ist, die zu dem fluidischen Schalter gehört, der durch die Flüssigkeit in der Steuerkapillare geöffnet werden soll.

Die Steuerkapillare bildet gemeinsam mit dem geometrischen Kapillarstopp einen fluidischen Schalter.

Die Kapillarkraft am Anfang der Steuerkapillare ist größer als die Kapillarkraft in der zweiten Kapillare im Bereich der Abzweigung.

Die Steuerkapillare kann mäanderförmig sein und kann einem Erweiterung enthalten. Die Stoppzeit der Flüssigkeit in der zweiten Kapillare beginnt mit dem Anhalten der Flüssigkeit am Kapilarstopp und endet zu dem Zeitpunkt, an dem die in die erweiterte Kapillare eingetretene Steuerflüssigkeit die am Kapillarstopp angehaltene Flüssigkeit berüht. Die Stoppzeit ist im wesentlichen die Zeit, die die Steuerflüssigkeit benötigt, um vom Eintritt in die Steuerkapillare bis zu der erweiterten Kapillare zu strömen. Bei einer Steuerkapillare, die an die zweite Kapillare vor dem Kapillarstopp angeschlossen ist, richtet sich die Stoppzeit im wesentlichen nach der Länge der Steuerkapillare. Die Länge der Steuerkapillare kann zum Beispiel bei einer mäanderformigen Steuerkapillare in einem großen Bereich gewählt werden. Das Flüssigkeitsvolumen, das sich in der Steuerkapillare befindet, beträgt wenige Prozent des Flüssigkeitsvolumens, das über den von der Steuerkapillare angesteuerten und geöffneten fluidischen Schalter hinwegfließt.

Die Steuerkapillare kann einen Querschnitt mit fast beliebiger Form haben. Bevorzugt wird ein rechteckiger oder ein quadratischer Querschnitt. Die Seitenlänge des Quadrates beträgt von 10 Mikrometer bis 400 Mikrometer, bevorzugt von 50 Mikrometer bis 200 Mikrometer. Die Steuerkapillare kann von 5 Millimeter bis 400 Millimeter lang sein. Mit einer Steuerkapillare mit quadratischem Querschnitt von 50 Mikrometer Seitenlänge lassen sich (mit Wasser als Steuerflüssigkeit) Stoppzeiten von 0,5 Sekunden bis 20 Minuten erreichen. Falls die Steuerkapillare eine Erweiterung enthält, also einen Abschnitt mit größerem Querschnitt und größerem Volumen, lassen sich Stoppzeiten erreichen, die größer sind als die Stoppzeiten, die mit einer Steuerkapillare ohne Erweiterung erreichbar sind.

Die Steuerkapillare kann an einen dritten Hohlraum auf der Plattform angeschlossen sein.

Der dritte Hohlraum kann - unabhängig vom Einfüllen der zu handhabenden Flüssigkeit in den Einlass vor der ersten Kapillare - mit einer Steuerflüssigkeit befüllt werden. Die Zeit zwischen dem Einfullen der zu handhabenden Flüssigkeit in den Einlass vor der ersten Kapillare der Plattform und dem Einfüllen der Steuerflüssigkeit in den dritten Hohlraum der Plattform kann in einem großen Bereich frei gewählt werden.

Die erweiterte Kapillare kann in einen vierten Hohlraum münden, der als Reaktionskammer ausgelegt sein kann. Der Übergang der erweiterten Kapillare in den vierten Hohlraum ist ohne Kapillarstopp ausgebildet. Der vierte Hohlraum kann einerseits über eine letzte Kapillare, die an ihrem Ende offen ist, mit der Umgebung verbunden sein. Andererseits kann der vierte Hohlraum über eine dritte Kapillare mit einem Sammelraum für die abgetrennte Teilmenge der Flüssigkeit verbunden sein. Der Übergang der dritten Kapillare in den Sammelraum ist ohne Kapillarstopp ausgebildet.

Für mehrstufige Reaktionen können mehrere Hohlräume hintereinander angeordnet sein, die durch Kapillaren - mit oder ohne fluidische Schalter - verbunden sind. In diesem Fall ist der letzte Hohlraum über eine letzte Kapillare, die an ihrem Ende offen ist, mit der Umgebung verbunden.

Die jeweils letzte Kapillare dient zum Entlüften, sobald die zu handhabende Flüssigkeit an der Abzweigstelle in die zugehörende zweite Kapillare eintritt.

Die dosierte Teilmenge der Flüssigkeit wird durch das Volumen der zweiten Kapillare zwischen deren Abzweigstelle von der ersten Kapillare und dem Kapillarsprung bestimmt. Dieses Volumen kann über die Länge der zweiten Kapillare und/oder über eine Erweiterung oder einen Hohlraum im Verlauf der zweiten Kapillare an das gewünschte Volumen der Teilmenge angepasst sein. Die Erweiterung oder der Hohlraum im Verlauf der zweiten Kapillare kann als Reaktionskammer ausgelegt sein.

In der Reaktionskammer, in die die erweiterte Kapillare mündet, ist ein - bevorzugt eingetrocknetes - Reagenz enthalten, das in der dosierten Teilmenge der Flüssigkeit eine Reaktion hervorrufen kann. Ebenso kann die Erweiterung oder der Hohlraum im Verlauf der zweiten Kapillare ein - bevorzugt eingetrocknetes - Reagenz enthalten, das für sich allein genommen oder in Verbindung mit dem Reagenz in der Reaktionskammer im Anschluss an die erweiterte Kapillare eine Reaktion in der Flüssigkeit hervorrufen kann.

Die Reaktion der Flüssigkeit mit dem Reagenz in dem Hohlraum im Verlauf der zweiten Kapillare und/oder die Reaktion der Flüssigkeit mit dem Reagenz in der Reaktionskammer, in die die erweiterte Kapillare mündet, kann eine Veränderung in der Flüssigkeit hervorrufen. Eine solche Veränderung kann in der Erweiterung im Verlauf der zweiten Kapillare und/oder in der Reaktionskammer - bevorzugt optisch - beobachtet werden. Während der Beobachtung kann die Erweiterung in der zweiten Kapillare und/oder die Reaktionskammer die zu handhabende Flüssigkeit noch enthalten oder nicht enthalten. Eine derartige Veränderung oder das Ausbleiben einer Veränderung kann auf die Anwesenheit oder die Abwesenheit einer Komponente in der zu handhabenden Teilmenge der Flüssigkeit hinweisen.

Die mikrostrukturierte Kette von Elementen umfasst bei der ersten Ausführungsform der Plattform eine zweite Kapillare - mit oder ohne Erweiterung - sowie einen fluidischen Schalter und mindestens einen Hohlraum. Einer oder mehrere der Hohlräume können für Reaktionen benutzt werden und können Reagenzien enthalten. Mindestens einer der Hohlräume in einer Kette dient als Analysenkammer, in der eine eingetretene oder ausgebliebene Veränderung qualitativ oder halb-quantitativ visuell erkannt oder quantitativ photometrisch bestimmt werden kann. Diese Kette von Elementen kann - allein oder gemeinsam mit anderen Elementen - in der Plattform mehrfach vorhanden sein.

In der Plattform in ihrer ersten Ausführung wird die Flüssigkeit wie folgt gehandhabt. In den Einlass vor der ersten Kapillare wird eine begrenzte Menge der zu handhabenden Flüssigkeit eingefüllt, aus der mindestens eine dosierte Teilmenge entnommen werden soll. Das begrenzte Einfüllvolumen ist etwas größer als das vorgegebene Gesamtvolumen aller zweiten Kapillaren der Plattform zwischen deren Einlass und dem zugehörenden Kapillarstopp zuzüglich des Volumens der ersten Kapillare zwischen deren Einlass und Auslass.

Die eingefüllte Flüssigkeit tritt durch Kapillarkraft in die erste Kapillare ein und fließt in Richtung zum Auslass der ersten Kapillare. Sobald die Flüssigkeit an der Abzweigstelle einer zweiten Kapillare vorbei strömt, tritt sie wegen der relativ größeren Kapillarkraft am Eingang der zweite Kapillare in diese ein und füllt die zweite Kapillare bis zu dem zugehörenden Kapillarstopp, durch den sie zunächst angehalten wird. Das zunächst in allen Kapillaren vorhandene Gas, zum Beispiel Luft unter Umgebungsdruck, wird von der eintretenden Flüssigkeit verdrängt und entweicht aus dem Auslass der ersten Kapillare und über den Kapillarstopp in jeder zweiten Kapillare hinweg aus dem jeder zweiten Kapillare zugeordneten Auslass. Der Kapillarstopp hält eine strömende Flüssigkeit an, jedoch nicht ein strömendes Gas. Genau so werden alle zweiten Kapillaren mit Flüssigkeit aus der ersten Kapillare gefüllt.

In den Einlass der ersten Kapillare strömt die vorgelegte Flüssigkeit mindestens so lange ein, bis alle zweiten Kapillaren bis zum jeweiligen Kapillarstopp vollständig mit Flüssigkeit gefüllt sind. Nachdem die letzte zweite Kapillare mit Flüssigkeit gefüllt ist, befindet sich die in den Einlass eingegebene Flüssigkeit im wesentlichen in den zweiten Kapillaren. Durch die größere Kapillarkraft am Ende der ersten Kapillare als an deren Anfang fließt der Rest der im Einlass vorgelegten Flüssigkeit in den Auslass. Die erste Kapillare läuft - an deren Einlass beginnend - leer und füllt sich mit dem umgebenden Gas, zum Beispiel mit Luft.. Wenn das Ende der Flüssigkeit in der ersten Kapillare die Abzweigstelle einer zweiten Kapillare passiert, wird die in der zweiten Kapillare enthaltene dosierte Teilmenge von dem Rest der Flüssigkeit in der ersten Kapillare getrennt. Die in den zweiten Kapillaren befindliche Flüssigkeit fließt nicht in die erste Kapillare zurück. Sobald die erste Kapillare in voller Länge frei von Flüssigkeit ist, sind die Teilmengen in allen zweiten Kapillaren von dem Rest der Flüssigkeit und voneinander getrennt. Die Teilvolumina in den zweiten Kapillaren zwischen deren Einlass und dem zugehörenden Kapillarstopp können unterschiedlich groß groß sein. Das kann durch eine Aufweitung im Verlauf der zweiten Kapillare erreicht werden.

Der Kapillarstopp am Ende jeder zweiten Kapillare hält die Strömung der Flüssigkeit so lange an, bis die Steuerflüssigkeit den Anfang der erweiterten Kapillare hinter dem Kapillarsprung hinreichend gefüllt hat und die Steuerflüssigkeit die am Kapillarsprung anstehende Flüssigkeit berührt. Dadurch wird die Strömung der Flüssigkeit in der zweiten Kapillare wieder in Gang gesetzt. Das in jeder zweiten Kapillare enthaltene dosierte und abgetrennte Teilvolumen der zu handhabenden Flüssigkeit strömt über den Kapillarstopp hinweg und wird durch Kapillarkraft in einen jeweils stromabwärts gelegenen Hohlraum weitertransportiert, wo es für die weitere Verwendung zur Verfügung steht. Die Stoppzeit kann für alle zweiten Kapillaren gleich groß sein, oder sie kann unterschiedlich groß gewählt werden.

Die Stoppzeit eines fluidischen Schalters ist die Zeit, die zwischen dem Eintreten der Steuerflüssigkeit in die Steuerkapillare und dem Füllen der Steuerkapillare mit Steuerflüssigkeit bis zu deren Ende im Bereich des Kapillarsprungs in der zweiten Kapillare verstreicht. Die Stoppzeit kann von 0,1 Sekunden bis 20 Stunden betragen. Sie richtet sich nach der Zeit, die für den Ablauf einer Reaktion in der zu handhabenden Flüssigkeit vorgegeben ist.

Falls die Steuerkapillare an die zweite Kapillare angeschlossen ist, oder falls die Steuerkapillare an einen anderen Hohlraum auf der Plattform angeschlossen ist und dieser Hohlraum mit einer anderen Menge der zu handhabenden Flüssigkeit befüllt wird, ist die Steuerflüssigkeit gleich der zu handhabenden Flüssigkeit. Falls der andere Hohlraum auf der Plattform mit einer anderen Flüssigkeit befüllt wird, ist die Steuerflüssigkeit verschieden von der zu handhabenden Flüssigkeit.

Die erfindungsgemäße Plattform kann zusätzlich zu den oben genannten Elementen weitere fluidische Schalter und weitere Hohlräume enthalten, die hinter den oder parallel zu den oben angegebenen Elementen angeordnet sein können. Derartige Anordnungen können mehrere Reaktionskammern enthalten und für mehrstufige Reaktionen verwendet werden, für die mehrere unterschiedlich lange Stoppzeiten vorgegeben sein können.

Die erfindungsgemäße Plattform in ihrer ersten Ausführung kann ohne Eingreifen von aussen für folgende Verfahrensschritte verwendet werden:
- vorgegebene Teilmengen der zu handhabenden Flüssigkeit getrennt voneinander entnehmen und von der zu handhabenden Flüssigkeit abtrennen,
- dosierte Teilmengen jeweils mit einer vorgegebenen Menge eines Reagenz in Kontakt bringen, wobei das Reagenz immobilisiert sein kann oder von der Flüssigkeit aufgelöst oder resuspendiert werden kann, und für jede dosierte Teilmenge ein anderes Reagenz gewählt werden kann,
- dosierte Teilmengen, die aus der zu handhabenden Flüssigkeit abgetrennt sind, für eine vorgegebene Stoppzeit anhalten, wobei die Stoppzeit für jede Teilmenge in einem großen Bereich unterschiedlich gewählt werden kann,
- dosierte Teilmengen nach Ablauf der jeweiligen Stoppzeit durch Öffnen des fluidischen Schalters weitertransportieren,
- dosierte Teilmenge mit einem zweiten und gegebenenfalls mit weiteren Reagenzien in Kontakt bringen,
- Veränderungen in jeder dosierten Teilmenge separat voneinander nach Reaktion mit mindestens einem Reagenz bevorzugt auf optischem Wege nachweisen, zum Beispiel als Veränderung der Farbe, der Extinktion, der Fluoreszenz, der Trübung, der Doppelbrechung oder eines anderen bevorzugt optischen Merkmals, wobei die beobachtete Ausprägung des Merkmals entstanden oder verschwunden sein kann.

Hieraus kann zum Beispiel in der medizinischen Diagnostik auf die Anwesenheit oder Abwesenheit einer in der zu handhabenden Flüssigkeit vermuteten Substanz geschlossen werden.

Die Verfahrensschritte können quantitativ oder halbquantitativ durchgeführt werden. Innerhalb einer Plattform können mit derselben zu handhabenden Flüssigkeit mehrere Ketten der genannten Verfahrensschritte mit denselben oder unterschiedlich gewählten Parametern parallel ablaufen.

Wegen der Auslegung der Plattform werden bevorzugt mehrere dosierte Teilmengen der zu handhabenden Flüssigkeit vorgelegt, die jeweils vorgegebene Mengen der eingesetzten Reagenzien aufnehmen. Die in j eder Teilmenge der zu handhabenden Flüssigkeit eingetretenen Veränderungen werden in definierter und reproduzierbarer Form analysiert.

In einer zweiten Ausführung kann die erfindungsgemäße Plattform zum Beispiel gemäß der ersten Ausführung zusätzlich mindestens einen mit Mikrostrukturen versehenen Bereich enthalten, der zum Zusammenhalten einer begrenzten Flüssigkeitsmenge auf der Oberfläche der mikrostrukturierten Plattform an der Stelle dient, an der die begrenzte Flüssigkeitsmenge aufgetragen wird.

Der mikrostrukturierte Bereich zum Zusammenhalten einer begrenzten Flüssigkeitsmenge kann Strukturelemente in Form von Säulen oder Stegen enthalten, die im wesentlichen senkrecht auf dem Boden des mikrostrukturierten Bereiches stehen, und deren Abmessungen in mindestens einer Richtung parallel zum Boden im Mikrometerbereich von 0, 1 µm bis 500 µm liegen. Die Säulen oder Stege können mehrere Millimeter hoch sein. Der Querschnitt der Säulen oder Stege kann weitgehend beliebig geformt sein; er kann kreisrund, elliptisch, dreieckig, rechteckig, regelmäßig oder unregelmäßig vieleckig, unregelmäßig konvex, unregelmäßig konkav sein, oder die Säulen oder Stege können keilförmige Kerben enthalten, wobei die Keilkante senkrecht oder im wesentlichen senkrecht zum Boden des mikrostrukturierten Bereiches verläuft. Die Stege können in ihrer Richtung parallel zum Boden fast beliebig geformt sein; sie können gerade, geknickt oder gebogen sein. Zwischen den Säulen oder Stegen befinden sich kapillare Hohlräume, deren Abmessungen in mindestens einer Richtung parallel zum Boden im Mikrometerbereich von 0,1 µm bis 1000 µm liegen. Die kapillaren Hohlräume bilden bevorzugt einen zusammenhängenden Bereich.

Die Strukturelemente können weiter die Form von Gräben haben, deren Abmessungen in mindestens einer Richtung quer zu ihrer Längsrichtung im Mikrometerbereich von 0,1 µm bis 1000 µm liegen. Die Gräben können mehrere Millimeter tief sein. Die Gräben bilden bevorzugt einen zusammenhängenden Bereich. Die Gräben können in Längsrichtung fast beliebig geformt sein; sie können gerade, gebogen, mäanderartig, gewinkelt, spiralförmig sein. Der Querschnitt der Gräben kann weitgehend beliebig geformt sein; er kann dreieckig, rechteckig, halbrund sein.

Innerhalb eines derartigen mikrostrukturierten Bereiches zum Zusammenhalten einer begrenzten Flüssigkeitsmenge können mehrere der angegebenen Strukturelemente nebeneinander vorliegen. Innerhalb einer Plattform können mehrere mikrostrukturierte Bereiche zum Zusammenhalten einer begrenzten Flüssigkeitsmenge vorliegen, die mit unterschiedlichen Strukturelementen versehen sein können.

Der Boden des Bereiches, der mit Säulen oder Stegen zum Zusammenhalten einer begrenzten Flüssigkeitsmenge versehen ist, kann einerseits auf demselben Niveau liegen wie der Boden außerhalb dieses Bereiches. Andererseits kann der Boden des Bereiches, der mit Säulen oder Stegen versehen ist, auf einem tieferen Niveau liegen als der Boden außerhalb dieses Bereiches. Dieser tiefer liegende Bereich ist von einer Wand umgeben. Sofern die Plattform annähernd horizontal liegt, kann in diesen tiefer liegenden Bereich eine begrenzte Flüssigkeitsmenge eingefüllt werden, die innerhalb dieses Bereiches zusammengehalten wird, auch wenn der tiefer liegende Bereich nicht mit Säulen oder Stegen versehen ist. Falls diese Plattform gegen die Horizontale geneigt oder über Kopf gedreht wird, kann die begrenzte Flüssigkeitsmenge den tiefer liegenden Bereich verlassen. Ist der tiefer liegende Bereich mit Säulen oder Stegen versehen, wird die in diesen Bereich eingefüllte begrenzte Flüssigkeitsmenge durch die Kapillarkraft zwischen den Säulen oder Stegen auch bei geneigter Plattform in dem Bereich zusammengehalten und zurückgehalten.

Die begrenzte Flüssigkeitsmenge kann auf einen derartigen mikrostrukturierten und nicht abgedeckten Bereich mittels eines geeigneten Gerätes, zum Beispiel einer Pipette, aufgetropft oder aufgebracht werden. Falls der mikrostrukturierte Bereich abgedeckt ist, kann die auf diesen Bereich aufzubringende begrenzte Flüssigkeitsmenge durch eine separate Einfüllöffnung und eine Kapillare, die die separate Einfüllöffnung mit dem mikrostrukturierten Bereich verbindet, in diesen Bereich gezielt eingebracht werden.

Die begrenzte Flüssigkeitsmenge, die auf der Oberfläche eines Festkörpers an einer vorgegebenen Stelle zusammengehalten werden soll, kann eine Lösung oder eine Dispersion einer Substanz sein, die an der vorgegebenen Stelle und nur dort vorliegen soll. Die gelöste oder dispergierte Substanz kann ein Reagenz sein, das in der zu handhabenden Flüssigkeit eine Veränderung bewirkt. Falls die zu handhabende Flüssigkeit in die Einfüllöffnung der Plattform viel später eingefüllt wird als die gelöste oder dispergierte Substanz auf die vorgegebene Stelle aufgebracht wird, kann die gelöste oder dispergierte Substanz an der vorgegebenen Stelle zunächst eingetrocknet werden. Die eingetrocknete Substanz wird später von der durch den Transportweg strömenden zu handhabenden Flüssigkeit aufgenommen.

Mit Hilfe mehrerer vorgegebener mikrostrukturierter Bereiche zum Zusammenhalten einer begrenzten Flüssigkeitsmenge auf einer Plattform können unterschiedliche Substanzen auf der Plattform bereitgehalten werden, die sich nicht beeinflussen können, solange sie in Lösung oder in Dispersion oder im eingetrockneten Zustand auf der Plattform in nebeneinander liegenden Bereichen getrennt gehalten werden.

Die auf einen derartigen mikrostrukturierten Bereich aufgetragene begrenzte Flüssigkeitsmenge wird durch die Kapillarkraft zwischen den Mikrostrukturen zusammengehalten, die im mikrostrukturierten Bereich größer ist als in dessen Umgebung. Die aufgetragene begrenzte Flüssigeitsmenge wird unabhängig von der räumlichen Lage der Plattform zusammengehalten. Die Plattform kann gegen die Horizontale geneigt sein, oder sie kann über Kopf gedreht werden, oder sie kann ruckartig bewegt werden. Die auf den mikrostrukturierten Bereich aufgetragene begrenzte Flüssigkeitsmenge wird sowohl in sich zusammengehalten als auch als Ganzes im mikrostrukturierten Bereich festgehalten und an einer Bewegung auf der Plattform gehindert. Der mit Mikrostrukturen versehene Bereich kann eine begrenzte Menge einer Flüssigkeit zusammenhalten, die deutlich größer ist als die Menge der Flüssigkeit, die in dem Bereich (durch die Oberflächenspannung der Flüssigkeit) zusammengehalten werden kann, wenn der Bereich keine Mikrostrukturen enthält.

In der zweiten Ausführungsform der erfindungsgemäßen Plattform wird die zu handhabende Flüssigkeit mit der Flüssigkeit in Kontakt gebracht, die in den Bereichen zum Zusammenhalten einer begrenzten Flüssigkeitsmenge vorhanden ist. Liegen auf der Plattform mehrere Bereichen zum Zusammenhalten einer begrenzten Flüssigkeitsmenge vor, wird die zu handhabende Flüssigkeit in der vorgesehenen Reihenfolge mit den - gegebenenfalls unterschiedlich großen - begrenzten Flüssigkeitsmengen in Kontakt gebracht.

Die zweite Ausführungsform der erfindungsgemäßen Plattform kann verwendet werden, wenn an mindestens einer vorgegebenen Stelle der Plattform eine begrenzte Flüssigkeitsmenge, die von außen aufgetragen wird, zusammengehalten werden soll. Die Flüssigkeitsmenge enthält in der Regel ein gelöstes oder suspendiertes Reagenz. Die begrenzte Flüssigkeitsmenge kann in flüssiger Form erhalten bleiben, oder die flüchtigen Bestandteile der begrenzten Flüssigkeitsmenge können verdampft werden oder können verdunsten, wobei das Reagenz eintrocknet.

Mit einer derartigen erfindungsgemäßen Plattform können auf engem Raum mehrere begrenzte Flüssigkeitsmengen auf vorgegebenen Stellen von außen aufgetragen werden. Die begrenzten Flüssigkeitsmengen werden in jeder Lage der Plattform sowie bei ruckartiger Bewegung der Plattform an den vorgegebenen Stellen zusammengehalten und voneinander getrennt gehalten. Die zu handhabende Flüssigkeit tritt mit den auf die vorgegebenen Stellen aufgetragenen begrenzten Flüssigkeitsmengen in einer vorgegebenen Reihenfolge in Kontakt. Die Kontaktzeit ist mittels der Stoppzeit von zugeordneten fluidischen Schaltern einstellbar.

Eine dritte Ausführung der erfindungsgemäßen Plattform kann zusätzlich zu den mikrostrukturierten Elementen der ersten Ausführung eine zweite Einfüllstelle für eine Flüssigkeit haben. Die zweite Einfüllstelle ist über eine separate Kapillare mit einem der anderen Hohlräume verbunden; der andere Hohlraum kann zum Beispiel eine Reaktionskammer sein, oder er kann die Kammer sein, in der die optische Veränderung der zu handhabenden Flüssigkeit beobachtet wird. Die separate Kapillare, die die zweite Einfüllstelle mit einem der anderen Hohlräume verbindet, kann mit einem fluidischen Schalter versehen sein, der einen geometrischen Kapillarstopp und eine Steuerkapillare umfasst.

In der dritten Ausführungsform kann ein Hohlraum, der über eine separate Kapillare mit der zweiten Einfüllstelle verbunden ist, mit einer Flüssigkeit - mit oder ohne einem darin vorhandenen Reagenz - gefüllt werden, bevor oder nachdem die zu handhabende Flüssigkeit in den Hohlraum eintritt oder eingetreten ist. Bei Bedarf kann die zu handhabende Flüssigkeit aus diesem Hohlraum durch die Flüssigkeit aus der zweiten Einfüllstelle verdrängt werden.

Weiter kann die zweite Einfüllstelle vor dem Deckeln der Plattform mit einer Flüssigkeit gefüllt werden. In diesem Fall dient die zweite Einfüllstelle als Speicher für die zweite Flüssigkeit.

Die dritte Ausführung der erfindungsgemäßen Plattform kann zum Beispiel verwendet werden, um den Hohlraum, der über die separate Kapillare mit der zweiten Einfüllstelle verbunden ist, mit einer zweiten Flüssigkeit zu beschicken. Dieser Verfahrensschritt kann als "Wasch-Schritt" bezeichnet werden. Er kann zum Beispiel erforderlich sein, wenn bei einer Reaktion in der zu handhabenden Flüssigkeit ein überschüssiger Rest eines Reagenz aus einer Reaktionskammer entfernt werden soll, falls dieser Rest das Beobachten einer Veränderung in der zu handhabenden Flüssigkeit erschwert oder verhindert, oder wenn nachfolgende Reaktionen durch diesen Rest gestört werden.

In einer vierten Ausführung kann die erfindungsgemäße Plattform mindestenes einen Kapillarspalt zum Abtrennen einer Flüssigkeit aus einer Dispersion enthalten. Die Plattform kann weiter einen ersten Hohlraum als Einlass für die zu handhabende Flüssigkeit und einen zweiten Hohlraum als Auslass umfassen. Der Auslass ist mit dem Einlass durch eine erste Kapillare verbunden. Die Kapillarkraft am Auslass der ersten Kapillare kann gleich oder größer sein als die Kapillarkraft am Einlass der ersten Kapillare.

Von der ersten Kapillare zweigt mindestens ein Kapillarspalt ab, dessen Abmessung in der ersten Richtung quer zur Transportrichtung der Flüssigkeit im Kapillarspalt mindestens an der Abzweigstelle kleiner ist als die kleinste Abmessung der ersten Kapillare quer zur Transportrichtung der Flüssigkeit in der ersten Kapillare. Die Abmessung des Kapillarspalts in der zweiten Richtung quer zur Transportrichtung der Flüssigkeit im Kapillarspalt kann viel größer sein als die Abmessung des Kapillarspalts in der ersten Richtung.

Die Plattform kann weiter einen dritten Hohlraum umfassen, der über eine zweite Kapillare mit dem Kapillarspalt verbunden ist, und zwar bevorzugt mit der Kante des Kapillarspalts, die der Einlasskante des Kapillarspalts gegenüber liegt. An den dritten Hohlraum kann sich eine dritte Kapillare anschließen, deren freies Ende zur Umgebung offen ist und als Kapillarstopp ausgebildet ist.

Nicht als Kapillarstopp ausgebildet sind
- der Übergang der ersten Kapillare in den Auslass-Hohlraum und
- der Übergang des Kapillarspalts in die zweite Kapillare und
- der Übergang der dritten Kapillare in den dritten Hohlraum.

Das offene Ende der dritten Kapillare dient zum Entlüften der vorgeschalteten Hohlräume und Kapillaren, sobald die zu handhabende Flüssigkeit in den Kapillarspalt eintritt.

Für mehrstufige Reaktionen kann der dritte Hohlraum mit einem oder weiteren Hohlräumen durch weitere Kapillaren verbunden sein.

Die Höhe des Kapillarspalts kann bis hinab zu 0,1 µm betragen, zum Beispiel in einer Plattform aus Metall. In Kunststoff kann der Kapillarspalt 1 µm oder mehr hoch sein. Die Höhe kann sich nach den Abmessungen der kleinsten Partikel richten, die in der zu handhabenden Flüssigkeit dispergiert sind. Die Breite des Kapillarspalts ist weitgehend beliebig. Mit zunehmender Breite des Kapillarspalts steigt der Durchsatz der Flüssigkeit, die durch den Kapillarspalt strömt.

Der Kapillarspalt kann - bevorzugt säulenförmige - Mikrostrukturen enthalten, wodurch mehrere Durchlässe im Kapillarspalts entstehen. Diese Mikrostrukturen sind bevorzugt so hoch wie der Kapillarspalt. Die Mikrostrukturen können den Deckel auf der Plattform im Bereich des Kapillarspalts abstützen.

Die Plattform ist bevorzugt vollständig gedeckelt, wobei der Einlass für die zu handhabende Flüssigkeit vor oder beim Einfüllen der zu handhabenden Flüssigkeit mit einer Öffnung - zum Beispiel durch Einstechen mit einer Spritze - versehen wird. Die Öffnung dient zum Einfüllen der Flüssigkeit und zum Belüften des Einlass-Hohlraumes. Der Auslass wird - vor oder beim Einfüllen der zu handhabenden Flüssigkeit in den Einlass - mit einer Entlüftungsöffnung versehen.

Der erste Hohlraum als Einlass für die zu handhabende Flüssigkeit und / oder der dritte Hohlraum - und / oder einer oder mehrere der weiteren Hohlräume, die auf den dritten Hohlraum folgen - können eingetrocknete Reagenzien enthalten. In den mit Reagenzien belegten Hohlräumen laufen Reaktionen mit der zu handhabenden Flüssigkeit oder mit der durch den Kapillarspalt daraus abgetrennten Flüssigkeit ab. Mindestens einer dieser Hohlräume dient als Analysenkammer, in der das Ergebnis solcher Reaktionen - bevorzugt optisch - analysiert werden kann

Die erfindungsgemäße Plattform in der vierten Ausführung kann mehrere Kapillarspalte - gegebenenfalls mit unterschiedlichen Abmessungen - enthalten, die von der ersten Kapillare abzweigen.

Weiter kann sich der dritte Hohlraum unmittelbar an den Kapillarspalt anschliessen. In diesem Fall ist keine zweite Kapillare zwischen dem Kapillarspalt und dem Hohlraum vorhanden. Der Kapillarspalt kann beispielsweise allmählich oder stufenweise in den Hohlraum übergehen. An einem solchen Übergang befindet sich kein Kapillarstopp.

Das Gesamtvolumen eines Kapillarspalts, eines oder mehrerer an den Kapillarspalt angeschlossener Hohlräume sowie der dazwischen liegenden Kapillaren ist durch die Mikrostruktur der Plattform vorgegeben. Falls von einer ersten Kapillare mehrere Kapillarspalte abzweigen, kann das Gesamtvolumen für jeden Zweig unterschiedlich groß sein. In einem derartigen Gesamtvolumen befindet sich eine dosierte Teilmenge der zu handhabenden Flüssigkeit, die halb-quantitativ oder quantitativ analysiert werden kann.

In der Plattform in der vierten Ausführung kann die Flüssigkeit - die dispergierte Partikel enthält - wie folgt gehandhabt werden. In den Einlass vor der ersten Kapillare wird die zu handhabende Flüssigkeit in einer begrenzten Menge oder als kontinuierlicher Strom eingegeben. Die zu handhabende Flüssigkeit strömt mittels Kapillarkraft durch die erste Kapillare zum Auslass-Hohlraum, wo sie gesammelt werden kann. Aus dem Flüssigkeitsstrom in der ersten Kapillare zweigt ein Teilstrom in den mindestens einen Kapillarspalt ab, der gegebenenfalls gar keine dispergierten Partikel mehr enthält, oder der nur Partikel unterhalb einer vorgegebenen Größe enthalten kann. Mit dem aus der vorgelegten zu handhabenden Flüssigkeit abgetrennten Teilstrom, der gegebenenfalls frei von dispergierten Partikeln ist, können Untersuchungen durchgeführt werden.

Während des Abtrennens eines Teilstromes aus der zu handhabenden Flüssigkeit strömt die Flüssigkeit, die alle - oder zumindest die meisten - dispergierten Partikel enthält, an dem mindestens einen Kapillarspalt vorbei und transportiert alle dispergierten Partikel zum Auslass. Vor dem Einlass in den mindestens einen Kapillarspalt sammeln sich keine dispergierten Partikel an, die den Kapillarspalt verstopfen könnten. Die im Auslass gesammelte Flüssigkeit ist an dispergierten Partikeln angereichert.

Mit der vierten Ausführung der erfindungsgemäßen Plattform wird im dritten Hohlraum die mittels des Kapillarspalts abgetrennte Teilmenge der Flüssigkeit, die keine oder fast keine Partikel enthalten kann, gesammelt. Gleichzeitig wird im zweiten Hohlraum eine an Partikeln angereicherte Teilmenge der zu handhabenden Flüssigkeit gesammelt.

Beide Teilmengen können - mit oder ohne zwischengeschalteten einstufigen oder mehrstufigen Reaktionen - auf charakteristische Merkmale untersucht werden. Die mittels des Kapillarspalts abgetrennte Teilmenge der Flüssigkeit kann auf Merkmale der Flüssigkeit untersucht werden. Falls die abgetrennte Teilmenge der Flüssigkeit an Partikeln abgereichert ist, können in dieser Flüssigkeit Merkmale der noch vorhandenen Partikel untersucht werden, die in der zu handhabenden Flüssigkeit, in der die dispergierten Partikel in hoher Konzentration vorliegen, nur schwer oder gar nicht zugänglich sind. Die dispergierten Partikel bleiben trotz des Abtrennens eines - an Partikeln abgereicherten oder eines partikelfreien - Teilstromes in unveränderter Form in der Umgebung erhalten, die in der zu handhabenden Flüssigkeit vorliegt. Die dispergierten Partikel agglomerieren oder agglutinieren nur dann, wenn zum Beispiel ein Hilfsmittel zugesetzt wird, das das Agglutinieren der dispergierten Partikel bewirkt.

Die Flüssigkeit im Auslass kann auf die darin angereicherten Partikel analysiert werden Falls die zu handhabende Flüssigkeit beim Einfüllen in den Einlass dosiert wird, kann die im Auslass gesammelte Flüssigkeit halb-quantitativ oder quantitativ analysiert werden,

In einer fünften Ausführung kann die erfindungsgemäße Plattform mindestens einen ersten Einlass für eine erste Flüssigkeit, zum Beispiel für eine Probenflüssigkeit, einen zweiten Einlass für eine zweite Flüssigkeit, zum Beispiel eine Waschflüssigkeit, einen gemeinsamen Auslass für die Flüssigkeiten und drei fluidische Schalter umfasst. Diese mikrostrukturierten Elemente sind durch mehrere Kapillaren verbunden.

Der erste Einlass für die erste Flüssigkeit ist über eine erste Kapillare mit einem ersten Hohlraum verbunden. Der erste Hohlraum ist über eine zweite Kapillare mit einem zweiten Hohlraum verbunden. In der zweiten Kapillare befindet sich ein erster fluidischer Schalter. Die erste Steuerkapillare zweigt aus der zweiten Kapillare stromabwärts des ersten Hohlraumes ab und führt zum Kapillarstopp des ersten fluidischen Schalters.

Der zweite Hohlraum ist über eine dritte Kapillare mit dem Auslass für die Flüssigkeiten verbunden. Die dritte Kapillare enthält einen zweiten fluidischen Schalter.

Aus der dritten Kapillare zweigt stromabwärts des zweiten Hohlraumes eine zweite Steuerkapillare ab, die zum Kapillarstopp eines dritten fluidischen Schalters führt. An den Kapillarstopp des dritten fluidischen Schalters ist über eine vierte Kapillare der zweite Einlass für eine zweite Flüssigkeit angeschlossen. Die erweiterte Kapillare des dritten fluidischen Schalters ist über eine Verbindungskapillare mit der zweiten Kapillare zwischen dem ersten fluidischen Schalter und dem zweiten Hohlraum verbunden. Die erweiterte Kapillare des dritten fluidischen Schalters geht vor ihrem Eintritt in die zweite Kapillare an einem Kapillarsprung in eine engere Kapillare über.

Aus der erweiterten Kapillare des dritten fluidischen Schalters zweigt eine dritte Steuerkapillare ab, die zum Kapillarstopp des zweiten fluidischen Schalters führt, der sich in der dritten Kapillare stromabwärts des zweiten Hohlraumes befindet.

Falls die Plattform gedeckelt ist, ist der Auslass und damit die Mikrostruktur als Ganzes über eine letzte Kapillare mit der Umgebung verbunden und wird über die letzte Kapillare entlüftet. Die letzte Kapillare kann an ihrem offenen Ende einen Kapillarsprung haben, der als Kapillarstopp für die in der letzten Kapillare anstehende Flüssigkeit wirkt.

Diese Mikrostruktur als Ganzes kann auf der erfindungsgemäßen Plattform mehrfach vorhanden sein. Jede dieser Mikrostrukturen kann aus einem einzigen Einlass mit einer einzigen ersten Flüssigkeit versorgt werden, oder aus mehreren Einlässen mit unterschiedlichen ersten Flüssigkeiten. Für jede dieser Mikrostrukturen kann dieselbe zweite Flüssigkeit verwendet werden, oder es können unterschiedliche zweite Flüssigkeiten verwendet werden.

In der Plattform in der fünften Ausführung können die Flüssigkeiten wie folgt gehandhabt werden. In den ersten Einlass wird eine begrenzte Menge einer ersten Flüssigkeit eingegeben. Die zu handhabende Flüssigkeit strömt mittels Kapillarkraft durch die erste Kapillare zum ersten Hohlraum, füllt diesen Hohlraum und strömt durch die zweite Kapillare bis zum ersten fluidischen Schalters in der zweiten Kapillare. Die Strömung der ersten Flüssigkeit wird am Kapillarstopp des ersten fluidischen Schalters für die Zeitspanne gestoppt, die als Verweilzeit der ersten Flüssigkeit im ersten Hohlraum festgelegt ist. Sobald die erste Flüssigkeit die Anschlußstelle der ersten Steuerkapillare in der zweiten Kapillare passiert, tritt die erste Flüssigkeit in die erste Steuerkapillare ein. Die Zeitspanne, die die erste Flüssigkeit braucht, um die erste Steuerkapillare bis zum Kapillarstopp des ersten fluidischen Schalters zu durchströmen, ist auf die Zeitspanne abgestimmt, während der die erste Flüssigkeit im ersten Hohlraum verweilen soll. Mit dem Eintreten der ersten Flüssigkeit aus der Steuerkapillare in die erweiterte Kapillare des ersten fluidischen Schalters wird der erste fluidische Schalter geöffnet.

Die erste Flüssigkeit strömt durch die erweiterte Kapillare stromabwärts des ersten fluidischen Schalters zum zweiten Hohlraum, füllt diesen Hohlraum und strömt durch die dritte Kapillare bis zum Kapillarstopp des zweiten fluidischen Schalters, der sich in der dritten Kapillare stromabwärts des zweiten Hohlraumes befindet. Die Strömung der ersten Flüssigkeit wird am Kapillarstopp des zweiten fluidischen Schalters für die Zeitspanne gestoppt, die als Verweilzeit der ersten Flüssigkeit im zweiten Hohlraum festgelegt ist.

Sobald die erste Flüssigkeit die Anschlußstelle der Verbindungskapillare an die zweite Kapillare passiert, tritt die erste Flüssigkeit in die Verbindungskapillare ein und strömt in dieser Verbindungskapillare bis zum Kapillarstopp in der Verbindungskapillare, der vor dem dritten fluidischen Schalter liegt. Dort wird die erste Flüssigkeit in der Verbindungskapillare angehalten.

Die erste Flüssigkeit, die durch die dritte Kapillare strömt, passiert die Anschlußstelle der zweiten Steuerkapillare an die dritte Kapillare und tritt in die zweite Steuerkapillare ein. Die Steuerflüssigkeit in der zweiten Steuerkapillare erreicht den Kapillarstopp des dritten fluidischen Schalters und öffnet diesen Schalter. Der dritte fluidische Schalter kann bereits geöffnet werden, bevor die Verweilzeit für die erste Flüssigkeit im zweiten Hohlraum abgelaufen ist. Damit tritt die zweite Flüssigkeit aus dem zweiten Einlass in die erweiterte Kapillare des dritten fluidischen Schalters ein. Die zweite Flüssigkeit kann zunächst nicht in die Verbindungskapillare zwischen dem dritten fluidischen Schalter und der zweiten Kapillare eintreten, da in dieser Verbindungskapillare ein Teil der ersten Flüssigkeit steht.

Nachdem der dritte fluidische Schalter geöffnet hat und die zweite Flüssigkeit in die erweiterte Kapillare stromabwärts des dritten fluidischen Schalters eingetreten ist, hat sie die Anschlußstelle der dritten Steuerkapillare passiert, die an die erweiterte Kapillare des dritten fluidischen Schalters angeschlossen ist. Diese Steuerflüssigkeit strömt durch die dritte Steuerkapillare bis zum Kapillarstopp des zweiten fluidischen Schalters, der zwischen dem zweiten Hohlraum und dem Auslass angeordnet ist. Der zweite fluidische Schalter wird geöffnet, sobald die Steuerflüssigkeit die dritte Steuerkapillare durchströmt hat und den Kapillarstopp des zweiten fluidischen Schalters erreicht hat.

Bis zum Öffnen des zweiten fluidischen Schalters enthält der erste Einlass eine Restmenge der ersten Flüssigkeit. Nach dem Öffnen des zweiten fluidischen Schalters strömt die erste Flüssigkeit aus dem ersten Einlass sowie aus dem ersten und dem zweiten Hohlraum weiter durch die erste, die zweite und die dritte Kapillare zum Auslass. Der Auslass enthält beispielsweise ein saugfähiges Vlies, das die Flüssigkeiten aus den Hohlräumen und Kapillaren heraussaugt. Im wesentlichen als letzte Flüssigkeit strömt die zweite Flüssigkeit aus dem zweiten Einlass durch den zweiten Hohlraum und die dritte Kapillare zum Auslass. Zumindest der zweite und der dritte Hohlraum sind praktisch frei von erster Flüssigkeit. Der dritte Hohlraum kann die zweite Flüssigkeit enthalten oder kann von der zweiten Flüssigkeit frei sein, sobald sich das Saugkissen im Auslass mit Flüssigkeit vollgesaugt hat.

Eine sechste Ausführung der erfindungsgemäßen Plattform kann mehrere unterschiedlich ausgelegte Transportwege für die zu untersuchende Flüssigkeit umfassen. Die Transportwege können parallel zu einander verlaufen, oder sie können verzweigt sein. In jedem Transportweg auf einer Plattform können mehrere Hohlräume vorhanden sein, die für unterschiedliche Zwecke vorgesehen sein können. Auf einer derartigen Plattform können mehrere Merkmale einer zu handhabende Flüssigkeit ohne eine chemische Reaktion oder nach einer chemischen Reaktion gleichzeitig untersucht werden. Die Analysenkammern können nach Form, Größe und Ort auf der Plattform an die vorgesehene analytische Beurteilung angepasst sein.

Weitere Ausführungen der erfindungsgemäßen Plattform können im Transportweg der zu handhabenden Flüssigkeit die angegebenen mikrostrukturierten Elemente in anderer Zusammenstellung umfassen.

Die mikrofluidischen Elemente können in einer erfindungsgemäßen Plattform zum Handhaben einer Flüssigkeit jeweils für sich allein genommen verwendet werden und entfalten ihre angegebene Wirkung. Falls mehrere der mikrostrukturierten Elemente in einer Plattform zum Handhaben einer Flüssigkeit zusammengeschaltet werden, erhält man eine Plattform, die an unterschiedliche Verfahren angepasst und dafür verwendet werden kann. Das mit einer solchen Plattform durchgeführten Verfahren läßt sich mit den bekannten Mitteln nur bei erhöhtem Aufwand durchführen.

Für mehrstufige Verfahren können mehrere der mikrostrukturierten Elemente hintereinander angeordnet sein. Eine derartige Kette von mikrofluidischen Elementen kann unverzweigt oder verzweigt sein. Eine erfindungsgemäße Plattform kann mehrere Ketten von mikrofluidischen Elementen umfassen, die gleichartig oder unterschiedlich aufgebaut sein können. Alle Ketten werden im allgemeinen aus einem Einlass mit der zu handhabenden Flüssigkeit versorgt. Auf einer derartigen Plattform können - ohne Eingreifen von außen - mehrere unterschiedliche Reaktionen oder eine einzige Reaktion - für Parallelbestimmungen - in der zu handhabenden Flüssigkeit durchgeführt werden, die zeitlich parallel zueinander ablaufen können.

Die erfindungsgemäße Plattform kann auf einer Seite mikrostrukturiert sein und nicht gedeckelt sein. Weiter kann sie auf der mikrostrukturierten Seite mit einem Deckel versehen sein, der entweder keine Mikrostrukturen enthält, oder der auf seiner der Mikrostruktur der Plattform zugewandten Seite mikrostrukturiert ist. Die auf einer Seite mikrostrukturierte Plattform kann Kanäle enthalten, die von der mikrostrukturierten Seite bis zur nicht mikrostrukturierten Seite der Plattform reichen. Mit solchen Kanälen kann die Mikrostruktur der Plattform mit einer Mikrostruktur im Deckel verbunden sein, die im Deckel auf seiner der Plattform zugewandten Seite vorhanden ist. Mit dieser Ausführung lassen sich zum Beispiel Kapillaren oder Steuerkapillaren realisieren, die wegen ihrer Linienführung nur schwer oder gar nicht auf der mikrostrukturierten Seite der Plattform untergebracht werden können.

Die Plattform kann auf mindestens zwei Seiten mikrostrukturiert sein. In diesem Fall kann sie auf mindestens einer mikrostrukturierten Seite mit einem Deckel versehen sein, der entweder unstrukturiert ist, oder der auf seiner der Mikrostruktur der Plattform zugewandten Seite mikrostrukturiert ist.

Eine Plattform, die auf mindestens zwei Seiten mikrostrukturiert ist, kann Kanäle umfassen, die von der Mikrostruktur auf einer Seite der Plattform bis zu der Mikrostruktur auf mindestens einer anderen mikrostrukturierten Seite der Plattform reichen.

Eine Plattform, die auf mindestens zwei Seiten mikrostrukturiert ist, kann auf mindestens einer mikrostrukturierten Seite mit einem Deckel versehen sein, der entweder unstrukturiert sein kann, oder der mit einer Mikrostruktur versehen sein kann.

Die erfindungsgemäße Plattform umfasst ein mikrostrukturiertes System, das für eine Vielzahl von Untersuchungen in der Biologie, Biochemie, Chemie und Medizin geeignet ist. Alle benötigten Elemente sind auf der Plattform vereinigt. Die zu untersuchende Flüssigkeit wird durch Kapillarkraft innerhalb der und zwischen den mikrostrukturierten Elementen bewegt. Die Bewegung der Flüssigkeit auf der Plattform kann durch selektiv geöffnete fluidische Schalter gesteuert werden. An der untersuchten Flüssigkeit kann bevorzugt aus Änderungen ihrer optischen Eigenschaften auf Zustände oder Vorgänge geschlossen werden, die in der Flüssigkeit selbst oder im Bereich ihrer Quelle vorgelegen haben oder abgelaufen sind.

Die mikrostrukturierte Plattform kann zum Beispiel unmittelbar durch zerspanende feinmechanische Bearbeitung und / oder Laser-Abtragung und / oder Ätzen hergestellt werden.

Weiter kann zuerst ein Formeinsatz hergestellt werden, dessen Mikrostruktur zur gewünschten Struktur der Plattform komplementär ist. Der Formeinsatz kann mittels der genannten Verfahren, mittels Lithographie oder Tiefenlithographie mit UV-Licht oder Gamma-Strahlung und anschließendem galvanischen Umformen (LIGA-Verfahren), oder mittels eines anderen Verfahrens hergestellt werden. Mit Hilfe eines Formeinsatzes bevorzugt aus Metall kann eine Vielzahl von Plattformen durch Abformen, zum Beispiel durch Spritzgießen oder Heißprägen, hergestellt werden.

Die mikrostrukturierte Plattform kann aus Metall, wie Nickel, Nickel-Kobalt, Silizium, oder Gold bestehen. Weiter kann sie aus einem - bevorzugt durchsichtigen - Kunststoff bestehen, bevorzugt aus Polymethyl-methacrylat, Polyether-ether-keton, Polykarbonat, Polystyrol, Polyethylen-terephthalat, Polybutylen-terephthalat bestehen.

Bei einer gedeckelten Plattform kann der Deckel mit der Plattform nach einem bekannten Verfahren verbunden werden, zum Beispiel durch Kleben, Bonden, Ultraschall-Schweißen, Laser-Schweißen, Laminieren, Zusammenklemmen.

Die Abmessungen der Plattform liegen im Bereich von 0,5 Millimeter bis zu einigen Zentimetern. Die äußere Form der Plattform ist weitgehend beliebig. Die Plattform kann eine runde Scheibe sein (zum Beispiel mit 150 mm Durchmesser und 2 mm Dicke, oder mit 80 mm Durchmesser und 3 mm Dicke), die während des Handhabens der Flüssigkeit schrittweise gedreht werden kann. Weiter kann die Plattform eine rechteckige Scheibe (zum Beispiel mit 75 mm ● 35 mm ● 3 mm, oder mit 65 mm ● 25 mm ● 2 mm, oder mit 5 mm ● 5 mm ● 2,5 mm) oder ein Quader (zum Beispiel mit 100 mm ● 100 mm ● 50 mm) sein.

Die Abmessungen des Deckels einer voll gedeckelten Plattform stimmen in der Deckelfläche bevorzugt mit der Fläche der Plattform überein. Bei einer teilweise gedeckelten Plattform richten sich die Abmessungen des Deckels zum Beispiel nach der Verwendung der Plattform.

Der Deckel kann eine Folie mit einer Dicke von 10 µm bis 400 µm sein. Diese Folie kann auch die Einfüllöffnungen und gegebenenfalls die Entlüftungsöffnungen abdecken. Zum Einfüllen einer zu handhabenden Flüssigkeit und zum Entlüften der Mikrostruktur kann die Folie mittels der Kanüle einer Einfüllspritze oder mittels einer Nadel durchstochen werden. Weiter kann der Deckel eine Platte mit einer Dicke von 0,4 mm bis mm ● sein, die an den Einfüllöffnungen und den Entlüftungsöffnungen der Plattform mit entsprechenden Öffnungen versehen ist.

Die erfindungsgemäße Plattform und damit durchgeführte Verfahren haben folgende Vorteile:
- Die Flüssigkeit wird in der Plattform durch Kapillarkraft transportiert. Die Einwirkung der Schwerkraft oder der Zentrifugalkraft oder die Einwirkung eines Druckunterschieds ist nicht erforderlich. Die unvermeidbare Wirkung der Schwerkraft ist vernachlässigbar gegenüber der Wirkung der Kapillarkraft.
- Die Plattform kann an den gewünschten Ablauf der Handhabung der Flüssigkeit angepasst werden.
- Die Plattform kann für mehrstufige Reaktionen in der zu handhabenden Flüssigkeit ausgelegt werden. Dabei können unterschiedlich lange Reaktionszeiten realisiert werden.
- Die zum Beispiel für eine Reaktion in einer Reaktionskammer oder für einen Vorgang in einer Resuspensionskammer erforderliche Zeit kann über die Auslegung der Steuerkapillare und ihre Anschlußstelle realisiert werden, also ohne Eingriff von außen. Innerhalb einer Plattform kann für jede Reaktionskammer die verlangte Reaktionszeit individuell realisiert werden.
- Der Weg der zu handhabenden Flüssigkeit kann Verzweigungen enthalten.
- Auf einer Plattform können mehrere Reaktionen gleichzeitig und / oder nacheinander ablaufen.
- Die Analysen werden reproduzierbar durchgeführt; sie können qualitativ, halb-quantitativ oder quantitativ sein.
- Die Plattform kann auch von ungeübten Personen sicher gehandhabt werden.
- Die Plattform ist in großer Stückzahl reproduzierbar herzustellen.
- Das Verfahren und die Plattform sind sowohl für Einzelproben der Flüssigkeit als auch für einen Flüssigkeitsstrom geeignet.
- Die Menge der zu handhabenden Flüssigkeit liegt bevorzugt im Bereich weniger Mikroliter oder darunter.
- Die Plattform kann Reagenzien - bevorzugt in trockener oder immobilisierter Form - als integrale Bestandteile enthalten.
- Die Plattform kann für eine Vielzahl von Untersuchungen insbesondere an physiologischen Flüssigkeiten verwendet werden, mit denen zum Beispiel Krankheiten, Drogen, Dopingmittel, pathogene und endogene Stoffe nachgewiesen werden können.
- Die Plattform und das Verfahren sind für relativ komplizierte Handhabungsprogramme verwendbar, bei denen mehr als ein Handhabungsschritt verlangt wird, wie zum Beispiel bei Immunitätsuntersuchungen.
- Auf der Plattform mit mikrostrukturierten Bereichen zum Zusammenhalten einer begrenzten Flüssigkeitsmenge wird eine in derartigen Bereichen aufgebrachte Flüssigkeitsmenge unabhängig von der räumlichen Lage der Plattform zusammengehalten. Die Plattform kann gegen die Horizontale geneigt sein, sie kann über Kopf gedreht sein, oder sie kann ruckartig bewegt werden.
- Die Plattform mit Dosiereinrichtung für die zu handhabende Flüssigkeit kann auch verwendet werden, wenn die zu handhabende Flüssigkeit nicht dosiert zu werden braucht.

Einige Strukturmerkmale der erfindungsgemäßen Plattform werden im folgenden näher erläutert.

An einem auf der erfindungsgemäßen Plattform vorhandenen Kapillarstopp wird die Flüssigkeitsströmung in der Kapillare angehalten, sobald die Front der Flüssigkeitsströmung in der Kapillare den Kapillarstopp erreicht.

Ein liquiphober Kapillarstopp innerhalb einer Kapillare (bei konstantem Querschnitt) ist ein Bereich, der von der anstehenden Flüssigkeit nicht benetzt wird. Ein derartiger Bereich kann in einer benetzbaren Kapillare erzeugt werden, wenn die Oberfläche der Kapillare im Bereich des Kapillarstopps flüssigkeitsabweisend gemacht wurde ("liquiphobierter" Bereich in Bezug auf die anstehende Flüssigkeit).

Ein geometrischer Kapillarstopp liegt vor, wenn sich der Querschnitt einer Kapillare (bei unveränderter Benetzbarkeit der Kapillare) sprunghaft vergrößert (Kapillarsprung). Bei einer in der Oberfläche einer Platte angebrachten Kapillare - mit rechteckigem Querschnitt und kapillaren Abmessungen in beiden Richtungen quer zur Längsrichtung - liegt auch dann ein Kapillarstopp vor, wenn die Kapillare über den Kapillarsprung hinweg abgedeckt oder nicht abgedeckt ist. Bei dieser Anordnung ist in der von der Abdeckung der Kapillare gebildeten Wand oder auf der offenen Seite der Kapillare kein Kapillarsprung vorhanden. Trotzdem ist die sprunghafte Erweiterung des Kapillarquerschnitts auf nur einem Teil (zum Beispiel nur auf drei Vierteln) seines Umfanges ein Kapillarstopp.

Derartige Kapillarstopps in einer abgedeckten Kapillare können von der anstehenden Flüssigkeit überwunden werden, wenn am Eingang der Kapillare auf die Flüssigkeit ein Druck ausgeübt wird, oder wenn der dort vorhandene Druck erhöht wird, oder wenn der Druck am anderen Ende der Kapillare vermindert wird.

Andererseits kann ein geometrischer Kapillarstopp in Form eines Kapillarsprunges von der Flüssigkeit ohne Unterbrechung der Strömung überwunden werden, wenn am Ende der engeren Kapillare eine keilförmige Kerbe angebracht ist. Die Kerbe kann von der Wand der engeren Kapillare bis zur Wand der erweiterten Kapillare reichen, oder sie kann in der Wand der engeren Kapillare beginnen und in der Wand des Kapillarsprungs allmählich auslaufen, wie in EP - 1 013 341 beschrieben ist. In der Keilkante der Kerbe ist die Kapillarkraft größer als in der Kapillare vor dem Kapillarsprung. Durch dieses konstruktive Merkmal wird eine außerhalb der Kapillare durchzuführende Manipulation vermieden. Ein mit einer Kerbe versehener Kapillarsprung hat keine Wirkung wie ein geometrischer Kapillarstopp.

Ein geometrischer Kapillarstopp in Form eines Kapillarsprungs ohne keilförmige Kerbe kann die Strömung der Flüssigkeit für eine vorgegebene Zeitspanne anhalten. Die Strömumg kann ohne Manipulation von außen nach Ablauf der Zeitspanne mittels eines fluidischen Schalters wieder in Gang gesetzt werden. Der fluidische Schalter umfasst mindestens eine Kapillare mit einem geometrischen Kapillarstopp, also einen Kapillarsprung ohne keilförmige Kerbe, und eine Steuerkapillare, durch den die zum Betätigen des fluidischen Schalters benutzte Flüssigkeit an den Kapillarstopp herangeführt wird und den fluidischen Schalter öffnet. Die Steuerkapillare mündet in die erweiterte Kapillare. Das Ende der Steuerkapillare kann mit einer keilförmigen Kerbe versehen sein, oder die Steuerkapillare mündet bei allmählicher Vergrößerung ihrer Querschnittsfläche in die erweiterte Kapillare. Das Ende der Steuerkapillare kann in einer der Seitenwände der erweiterten Kapillare oder in der Wand des Kapillarsprunges liegen. Weiter kann eine Seitenwand der Steuerkapillare stufenlos in die Wand des Kapillarsprunges beziehungsweise in eine Seitenwand der erweiterten Kapillare übergehen. Ferner kann der Boden der Steuerkapillare stufenlos in den Boden der erweiterten Kapillare übergehen. Schließlich können eine Seitenwand und der Boden der Steuerkapillare stufenlos in eine Seitenwand der erweiterten Kapillare oder in die Wand des Kapillarsprunges beziehungsweise in den Boden der erweiterten Kapillare übergehen. Weiter kann der Boden der Steuerkapillare über eine mehrstufige Treppe oder eine flach geneigte Rampe in den Boden der erweiterten Kapillare übergehen.

In allen Fällen fließt die durch die Steuerkapillare strömende Flüssigkeit ohne Verzögerung in die erweiterte Kapillare. Ein derart ausgebildetes Ende der Steuerkapillare hat nicht die Wirkung eines Kapillarstopps.

Sobald die aus der Steuerkapillare in die erweiterte Kapillare eingetretene Flüssigkeit die am Kapillarstopp in der engeren Kapillare anstehende Flüssigkeit berührt, strömt die in der engeren Kapillare durch den Kapillarstopp angehaltenen Flüssigkeit über den Kapillarstopp hinweg weiter. Der in der engeren Kapillare angehaltene Strom wird wieder "eingeschaltet".

Die engere Kapillare mit dem Kapillarstopp kann an einen ersten Flüssigkeitsbehälter angeschlossen sein, der die engere Kapillare mit Flüssigkeit versorgt. Die Steuerkapillare, die zu der erweiterten Kapillare führt, kann einerseits ebenfalls an den ersten Flüssigkeitsbehälter angeschlossen sein. In diesem Fall befindet sich in der engeren Kapillare und in der Steuerkapillare dieselbe erste Flüssigkeit. Die Steuerkapillare, die zu der erweiterten Kapillare führt, kann andererseits an einer Stelle angeschlossen sein, die eine andere zweite Flüssigkeit enthält. Bei zwei Flüssigkeitsbehältern können die beiden Behälter zum gleichen Zeitpunkt oder zu verschiedenen Zeitpunkten mit Flüssigkeit gefüllt werden.

Falls die engere Kapillare und die Steuerkapillare an denselben Flüssigkeitsbehälter angeschlossen sind, können für die Abmessungen der Steuerkapillare im Vergleich zu den Abmessungen der engeren Kapillare bis zum Kapillarstopp Werte gewählt werden, bei denen die in der engeren Kapillare enthaltene Flüssigkeit um eine vorgegebene Zeitspanne angehalten wird. Falls die engere Kapillare und die Steuerkapillare an verschiedene Flüssigkeitsbehälter angeschlossen sind, kann die Flüssigkeit in den zweiten Behälter zu einem späteren Zeitpunkt eingefüllt werden als die Flüssigkeit in den ersten Behälter. In beiden Fällen kann die vorgegebene Zeitspanne zum Anhalten der Flüssigkeit in der engeren Kapillare fast beliebig groß gewählt werden. Die Stoppzeit, während der die Flüssigkeit in der engeren Kapillare durch den Kapillarstopp angehalten wird, kann von Bruchteilen einer Sekunde bis zu vielen Stunden betragen.

Ein fluidischer Schalter mit einem geometrischen Kapillarstopp und einer Steuerkapillare mit rechteckigem Querschnitt kann folgende typischen Abmessungen haben:

| | | |
|---|---|---|
| • (engere) Kapillare vor dem Kapillarstopp: | | |
| | Breite | 5 µm bis 3000 µm |
| | Tiefe | 0,5 µm bis 2000 µm |
| • (erweiterte) Kapillare hinter dem Kapillarstopp: | | |
| | Breite | 10 µm bis 4000 µm |
| | Tiefe | 2 µm bis 3000 µm |
| • Steuerkapillare: | Breite | 5 µm bis 2000 µm |
| | Tiefe | 10 µm bis 100 µm |
| | Volumen | 0,01 µl bis 10 µl |
| • Stoppzeit: | 0,1 Sekunden bis 20 Stunden | |

Ein fluidischer Schalter mit einem Kapillarsprung als geometrischem Kapillarstopp umfaßt im einfachen Fall eine engere Kapillare, die an dem Kapillarsprung in eine erweiterte Kapillare übergeht, sowie eine einzige Steuerkapillare, die in die erweiterte Kapillare im Bereich des Kapillarstopps mündet. An einen fluidischen Schalter können mehrere Steuerkapillaren angeschlossen sein, die im Bereich des Kapillarstopps in die erweiterte Kapillare münden. Ein derartiger fluidischer Schalter kann von mehreren Stellen aus angesprochen werden; er wird von der Stelle aus geöffnet, von der die Steuerflüssigkeit ausgeht, die den fluidischen Schalter als erste erreicht.

Weiter können an die erweiterte Kapillare eines fluidischen Schalters Kapillaren angeschlossen sein, in die die Flüssigkeit eintritt, die nach dem Öffnen des fluidischen Schalters in die erweiterte Kapillare strömt. Diese Kapillaren können Steuerkapillaren sein, die eine Steuerflüssigkeit an andere fluidische Schalter auf der Plattform heranführen, oder die Flüssigkeit zu anderen Stellen der Plattform leiten.

Die erfindungsgemäße Plattform zum Handhaben einer Flüssigkeit mit mikrostrukturierten Elementen, die im Transportweg der Flüssigkeit angeordnet sind, und die Verwendung einer derartigen Plattform wird durch die folgenden Beispiele und schematischen Figuren erläutert.

### Beispiel 1a : Plattform mit zwei Reaktionskammern, einem fluidischen Schalter und Dosiereinrichtung

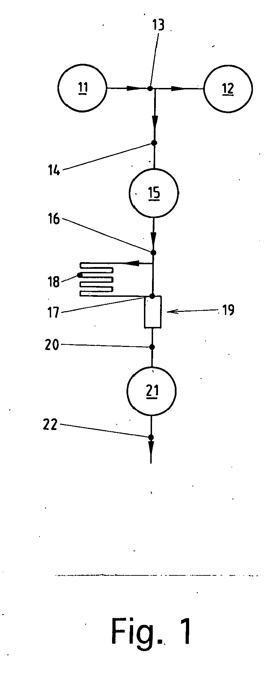

Die Plattform ist beispielsweise gemäß der schematischen Figur 1 mikrostrukturiert. Die Eingabekammer (11) als Einlass ist mit der Sammelkammer (12) als Auslass durch die Kapillare (13) verbunden. Aus der Kapillare (13) zweigt die Kapillare (14) ab, die zu dem ersten Hohlraum (15) führt, der als Reaktionskammer ausgebildet ist. Die Reaktionskammer (15) enthält ein Trockenreagenz. Aus der Reaktionskammer (15) führt die engere Kapillare (16) zum fluidischen Schalter, der den Kapillarstopp (17) am Ende der engere Kapillare (16) und die mäanderförmige Steuerkapillare (18) umfaßt. Die mäanderförmige Steuerkapillare (18) zweigt vor dem Kapillarstopp (17) aus der engeren Kapillare (16) ab und führt in die erweiterte Kapillare (19), die sich an das Ende der engeren Kapillare (16) anschließt. Aus der erweiterten Kapillare (19) führt die Kapillare (20) zu dem zweiten Hohlraum (21), der als Reaktionskammer ausgebildet ist. Die Reaktionskammer (21) enthält ein weiteres Trockenreagenz, das auf die Wirkung des in der Reaktionskammer (15) vorgelegten Trockenreagenz abgestimmt ist. Die Kapillare (22) beginnt an der Reaktionskammer (21) und endet am Kapillarstopp am offenen Ende der Kapillare (22). Die Kapillare (22) dient zum Entlüften der Kammern (15) und (21) sowie der mit diesen Kammern verbundenen Kapillaren (14), (16), (18), (19) und (20), sobald Flüssigkeit aus Kapillare (13) in Kapillare (14) eintritt.

Das Volumen der Eingabekammer (11) ist etwas größer als die Summe der Volumina der Kapillare (14), der Kammer (15) und der Kapillare (16). Wegen der gewählten Abmessungen der Kapillaren (13), (14) und (16) sowie des Hohlraumes (15) ist die Zeit zwischen dem Eintreten der Flüssigkeit in Kapillare (14) und dem Eintreffen der Flüssigkeit am Kapillarstopp (17) kleiner als die Zeit, die die in der Eingabekammer (11) vorgelegte Flüssigkeit braucht, um über Kapillare (13) in die Sammelkammer (12) zu strömen. Deshalb trennt sich die durch die Kapillare (13) strömende Flüssigkeit von der in Kapillare (14) vorhandenen Flüssigkeit, sobald das Ende der Flüssigkeitsströmung in Kapillare (13) die Anschlußstelle der Kapillare (14) passiert hat, und bevor der fluidischer Schalter am Kapillarstopp (17) geöffnet worden ist. Zwischen dem Eingang der Kapillare (14) und dem Kapillarstopp (17) ist eine vorgegebene Teilmenge der vorgelegten Flüssigkeit vorhanden. Nach dem Öffnen des fluidischen Schalters strömt die abgetrennte dosierte Teilmenge aus Kammer (15) annähernd vollständig in die Kammer (21), bis die Strömung am Kapillarstopp am Ende der Kapillare (22) angehalten wird. Kammer (21) ist vollständig mit der zu handhabenden Flüssigkeit gefüllt.

Die Übergänge der Kapillaren (13), (14) und (20) in die Hohlräume (12) beziehungeweise (15) beziehungsweise (21) sind ohne Kapillarstopp ausgeführt.

Die Mikrostruktur ist mit einem Deckel abgedeckt. Die Eingabekammer hat eine Öffnung zum Eingeben der zu untersuchenden Flüssigkeit und zum Belüften der Eingabekammer. Die Sammelkammer hat eine Entlüftungsöffnung.

Die Mikrostrukturen haben folgende typischen Abmessungen:

| | Länge | Tiefe | Breite | Durchmesser | Volumen |
|---|---|---|---|---|---|
| | µm | µm | µm | µm | µl |
| Eingabekammer (11) | (Form ist weitgehend beliebig) | | | | 10 |
| Sammelkammer (12) | (Form ist weitgehend beliebig) | | | | 15 |
| Kapillare (13) | 10000 | 200 | 400 | ----- | ------ |
| Kapillare (14) | 5000 | 100 | 200 | ----- | ------ |
| | | | | | |
| Reaktionskammer (15) | ------ | 100 | ------ | 2000 | 0,3 |
| engere Kapillare (16) | 3000 | 100 | 200 | ------ | ------ |
| Steuerkapillare (18) | 2000 | 50 | 200 | ------ | 0,02 |
| erweiterte Kapillare (19) | ------ | 200 | 300 | ------ | ------- |
| | | | | | |
| Kapillare (20) | 3000 | 100 | 200 | ------ | ------- |
| Reaktionskammer (21) | ------- | 100 | ----- | 2000 | 0,3 |
| Kapillare (22) | ------- | 100 | 100 | ------ | |

In der Plattform nach Beispiel 1a laufen folgende Verfahrensschritte ohne Eingreifen von außen ab, nachdem eine begrenzte Menge der zu untersuchenden Flüssigkeit in die Eingabekammer (11) eingegeben wurde, wobei die Flüssigkeit allein durch Kapillarkraft transportiert wird:
- Überleiten einer Teilmenge der vorgelegten Flüssigkeit aus der Einfüllkammer (11) in die Sammelkammer (12),
- Einleiten einer dosierten Teilmenge aus der eingefüllten Flüssigkeit über Kapillare (14) in die Kammer (15) bis zum Kapillarstopp (17) und Anhalten der Flüssigkeit für eine vorgegebene Zeitspanne,
- Trennen der dosierten Teilmenge von dem Rest der begrenzten Flüssigkeitsmenge, nachdem das Ende der Flüssigkeitsströmung aus der Kammer (11) in die Kammer (15) den Eingang in die Kapillare (14) passiert hat,
- Aufnehmen des in der Kammer (15) vorgelegten ersten Reagenz und Reaktion zwischen zu untersuchender Flüssigkeit und dem ersten Reagenz während einer vorgegebenen Verweilzeit der Flüssigkeit in der Kammer (15).
- Weiterleiten der Flüssigkeit aus der Kammer (15) in die Kammer (21), nachdem der fluidische Schalter nach Ablauf der vorgegebenen Stoppzeit durch die Steuerflüssigkeit aus der Steuerkapillare (18) geöffhet worden ist,
- Aufnehmen des in der Kammer (21) vorgelegten zweiten Reagenz und Reaktion zwischen zu untersuchender Flüssigkeit und dem zweiten Reagenz,
- visuelles Beurteilen oder Photometrieren der Veränderung, die in der Analysenkammer (21) eingetreten oder ausgeblieben ist.

Wegen der Auslegung der Plattform wird für diesen Nachweis eine dosierte Menge an vorgelegter Flüssigkeit benutzt. Bei dosierten Mengen der in den Kammern (15) und (21) vorgelegten Reagenzien verläuft der Nachweis in definierter und reproduzierbarer Weise. Damit kann ein Merkmal der vorgelegten Flüssigkeit aus einer optischen Veränderung in Kammer (21) bestimmt werden.

### Beispiel 1b : Nachweis von humanem chorionalem Gonadotropin (hcG) mittels einer Plattform mit zwei Reaktionskammern, einem fluidischen Schalter und Dosiereinrichtung

Zum Nachweisen von hcG in Urin wird in die erste Reaktionskammer (15) ein erster hcGspezifischer Antikörper eingebracht, der an mit Farbstoffmarkierte resuspendierbare Latexteilchen angelagert ist. Die zweite Reaktionskammer (21) enthält einen resuspendierbaren zweiten hcG-spezifischen Antikörper.

Der Nachweis kann wie folgt ablaufen: Die Urinprobe wird mittels einer Pipette oder Spritze in die Eingabekammer eingebracht, oder die Plattform wird ein vorgegebenes Stück in den Urin eingetaucht, bis die Eingabekammer gefüllt ist. Die Flüssigkeit strömt über Kapillare (13) in die Sammelkammer (12) und über Kapillare (14) in die Reaktionskammer (15) und füllt diese Kammer und die engere Kapillare (16), bis die Strömung am Kapillarstopp (17) angehalten wird. Aus der engeren Kapillare (16) tritt ein Teilstrom der Flüssigkeit in die mäanderförmige Steuerkapillare (18) ein, der erst nach Ablauf einer Stoppzeit die erweiterte Kapillare (19) erreicht und den fluidischen Schalter öffnet. Die Stoppzeit beträgt bei der dargestellten Plattform etwa 60 Sekunden.

Das in der ersten Reaktionskammer vorhandene Trockenreagenz wird durch die vorgelegte Flüssigkeit resuspendiert und durch Diffusion in der Flüssigkeit verteilt. In der Flüssigkeit vorhandenes hcG wird an den ersten hcG-Antikörper gebunden. Sobald der fluidische Schalter geöffnet ist, strömt die Flüssigkeit mit gebundenem und ungebundenem ersten Antikörper mittels Kapillarkraft in die zweite Reaktionskammer (21), in der nur an hcG gebundene erste Antikörper aus der ersten Reaktionskammer agglutiniert werden.

Falls in der vorgelegten Flüssigkeit kein hcG vorhanden ist, enthält die Flüssigkeit in Kammer (21) keine agglutinierten Latex-Partikel. Falls in der vorgelegten Flüssigkeit hcG vorhanden ist, enthält die Flüssigkeit in Kammer (21) agglutinierte Latex-Partikel, die am erhöhten Gehalt an Farbstoff erkennbar sind, im Gegensatz zu nicht agglutinierten Latex-Partikeln, die nicht erkennbar sind.

Wenn die Kammer (21) groß genug ist und visuell zu erkennen ist, kann der erfahrene Beobachter qualitativ entscheiden, ob in der vorgelegten Flüssigkeit hcG vorhanden ist oder nicht. Für Reihenuntersuchungen kann die Farbtiefe automatisch photometrisch gemessen werden.

### Beispiel 2a : Plattform mit zwei Reaktionskammern, mehreren fluidischen Schaltern und Waschvorrichtung

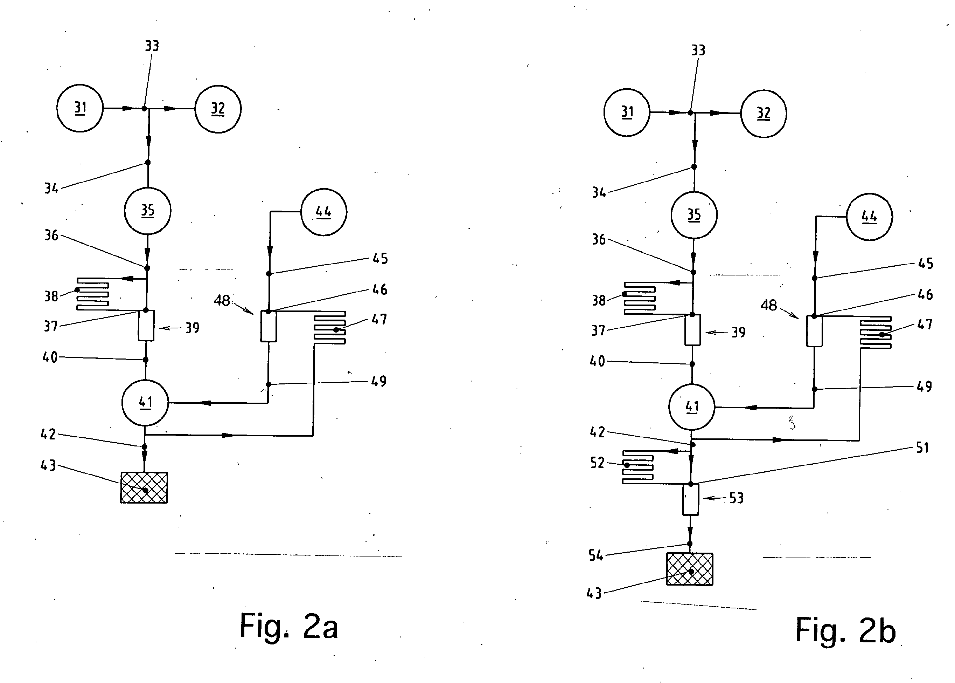

Die für diese Untersuchung benutzte Plattform umfasst zunächst die in der schematischen Figur 2a dargestellten Mikrostrukturen. Die Eingabekammer (31) als Einlass ist mit der Sammelkammer (32) als Auslass durch die Kapillare (33) verbunden. Aus der Kapillare (33) zweigt die Kapillare (34) ab, die zu dem ersten Hohlraum (35) führt, der als Reaktionskammer ausgebildet ist. Die Reaktionskammer (35) enthält ein Trockenreagenz. Aus der Reaktionskammer (35) führt die engere Kapillare (36) zum fluidischen Schalter, der den Kapillarstopp (37) am Ende der engeren Kapillare (36) und die mäanderförmige Steuerkapillare (3 8) umfaßt. Die mäanderförmige Steuerkapillare (3 8) zweigt vor dem Kapillarstopp (37) aus der engeren Kapillare (36) ab und führt in die erweiterte Kapillare (39), die sich an das Ende der engeren Kapillare (36) anschließt. Aus der erweiterten Kapillare (39) führt die Kapillare (40) zu dem zweiten Hohlraum (41), der als Reaktionskammer ausgebildet ist. Die Reaktionskammer (41) enthält ein weiteres Trockenreagenz, das auf die Wirkung des in der Reaktionskammer (35) vorgelegten Trockenreagenzes abgestimmt ist. Von der Reaktionskammer (41) führt die Kapillare (42) zu dem Hohlraum (43), der ein Saugkissen für Flüssigkeit enthält. Das Saugkissen im Hohlraum (43) kann eine Flüssigkeitsmenge aufnehmen, die zum Beispiel dreimal so groß ist wie die dosierte Teilmenge, die aus der in Kammer (31) vorgelegten Flüssigkeit abgetrennt worden ist

Weiter ist der Hohlraum (44) vorgesehen, aus dem die engere Kapillare (45) zum fluidischen Schalter führt, der den Kapillarstopp (46) am Ende der engeren Kapillare (45) und die mäanderförmige Steuerkapillare (47) umfasst. Die mäanderförmige Steuerkapillare (47) zweigt aus der Kapillare (42) ab und führt in die erweiterte Kapillare (48), die sich an die engere Kapillare (45) anschließt. Aus der erweiterten Kapillare (48) führt die Kapillare (49) zu dem Hohlraum (41). Gegebenenfalls kann die Kapillare (49) an die Kapillare (34) vor dem Hohlraum (35) angeschlossen sein.

Das Volumen der Eingabekammer (31) ist größer als die Summe der Volumina der Kapillare (34), der Kammer (35) und der Kapillare (36). Wegen der gewählten Abmessungen der Kapillaren (33), (34) und (36) sowie des Hohlraumes (35) ist die Zeit zwischen dem Eintreten der Flüssigkeit in Kapillare (34) und dem Eintreffen der Flüssigkeit am Kapillarstopp (37) kleiner als die Zeit, die die in der Eingabekammer (31) vorgelegte Flüssigkeit braucht, um über Kapillare (33) in die Sammelkammer (32) zu strömen. Die durch die Kapillare (33) strömende Flüssigkeit trennt sich von der in Kapillare (34) vorhandenen Flüssigkeit, sobald das Ende der Flüssigkeitsströmung in Kapillare (33) die Anschlussstelle der Kapillare (34) passiert hat. Zwischen dem Eingang der Kapillare (34) und dem Kapillarstopp (37) ist eine vorgegebene Teilmenge der vorgelegten Flüssigkeit vorhanden.

In Figur 2 b ist eine Variante der Plattform nach Figur 2 a dargestellt. Die aus dem Hohlraum (41) herausführende Kapillare (42) führt in einen fluidischen Schalter, der den Kapillarstopp (51) am Ende der engeren Kapillare (42) und die mäanderförmige Steuerkapillare (52) umfasst. Die mäanderförmige Steuerkapillare (52) zweigt vor dem Kapillarstopp (51) aus der engeren Kapillare (42) ab und führt in die erweiterte Kapillare (53), die sich an das Ende der engeren Kapillare (42) anschließt. Aus der erweiterten Kapillare (53) führt die Kapillare (54) zu dem Hohlraum (43), der ein Saugkissen für Flüssigkeit enthält.

Am Kapillarstopp (37) wird die in der Kapillare (34) - und gegebenenfalls im Hohlraum (35) - enthaltene Flüssigkeit angehalten, bis das dosierte Teilvolumen der zu handhabenden Flüssigkeit gebildet worden ist, das heißt bis der Flüssigkeitsstrom in Kapillare (33) am Anfang der Kapillare (34) abgerissen ist, und bis die gegebenenfalls im Hohlraum (35) ablaufende Reaktion beendet ist.

Am Kapillarstopp (51) wird die über die Kapillare (40) und den Hohlraum (41) geströmte Flüssigkeit angehalten. Erst danach öffnet die über Steuerkapillare (47) zum Kapillarstopp (46) geströmte Flüssigkeit den fluidischen Schalter, und der Weg für die Flüssigkeit aus Hohlraum (44) zum Hohlraum (41) wird freigegeben. Die Flüssigkeit aus Hohlraum (44) strömt jedoch noch nicht zum Hohlraum (41), da die Flüssigkeit im Hohlraum (41) nicht mehr strömt und die Kapillare (49) nicht entlüftete wird.

Am Kapillarstopp (51) wird die Flüssigkeit so lange angehalten, bis die Reaktion im Hohlraum (41) beendet ist. Danach öffnet die Steuerflüssigkeit aus Kapillare (52) den fluidischen Schalter, und die Flüssigkeit aus Hohlraum (41) strömt über Kapillare (54) zum Saugkissen im Hohlraum (43). Gleichzeitig setzt die Strömung der Flüssigkeit aus Hohlraum (44) über Hohlraum (41) zum Saugkissen ein.

Die Strömung in Kapillare (54) kann einerseits so lange dauern, bis die gesamte Flüssigkeit aus den Hohlräumen (41) und (44) in das Saugkissen eingetreten ist und der Hohlraum (41) keine Flüssigkeit mehr enthält. Andererseits kann die Strömung der Flüssigkeit in Kapillare (54) beendet sein, sobald das Saugkissen mit Flüssigkeit gesättigt ist, und der Hohlraum (41) noch mit Flüssigkeit aus Hohlraum (44) gefüllt ist.

Die Mikrostruktur ist mit einem Deckel abgedeckt. Die Eingabekammern (31) und (44) haben jeweils eine Öffnung zum Eingeben der zu untersuchenden Flüssigkeit und zum Belüften der Eingabekamnern. Die Sammelkammer (32) und die Kammer (43) haben jeweils eine Entlüftungsöffnung.

Die Mikrostrukturen - ausgenommen die Steuerkapillaren (38), (47) und (52) - haben Abmessungen, wie sie in Beispiel 1a angegeben sind. Die Steuerkapillaren (38), (47) und (52) sind für unterschiedliche Stoppzeiten ausgelegt.

Das Flüssigkeitsvolumen, das sich in der Steuerkapillare (38) befindet, beträgt wenige Prozent des Flüssigkeitsvolumens, das über den von der Steuerkapillare (38) angesteuerten und geöffneten fluidischen Schalter von dem Hohlraum (35) zum Hohlraum (41) fließt. Das Flüssigkeitsvolumen, das sich in der Steuerkapillare (47) befindet, beträgt wenige Prozent des Flüssigkeitsvolumens, das über den von der Steuerkapillare (47) angesteuerten und geöffneten fluidischen Schalter von dem Hohlraum (44) zum Hohlraum (41) fließt. Das Flüssigkeitsvolumen, das sich in der Steuerkapillare (52) befindet, kann dagegen einen nennenswerten Anteil des Flüssigkeitsvolumens betragen" das über den von der Steuerkapillare (52) angesteuerten und geöffneten fluidischen Schalter von dem Hohlraum (44) zum Hohlraum (41) fließt. Die aus dem Hohlraum (41) zum Hohlraum (43) fließende Flüssigkeit wird für die Untersuchung nicht mehr benötigt und wird verworfen.

Die Übergänge der Kapillaren (33), (34), (40), (42 oder 54) und (49) in die Hohlräume (32) beziehungeweise (35) beziehungsweise (41) beziehungsweise (43) beziehungsweise (41) sind ohne Kapillarstopp ausgeführt.

In die Plattform nach Beispiel 2a wird eine begrenzte Menge der zu untersuchenden Flüssigkeit in die Eingabekammer (31) und eine zweite Flüssigkeit in die Eingabekammer (44) eingegeben. Es kann zweckmäßig sein, zuerst die zweite Flüssigkeit in die Kammer (44) einzugeben. Die Flüssigkeit in Kammer (44) wird am Kapillarstopp (46) so lange angehalten, bis der fluidische Schalter über die Flüssigkeit aus Steuerkapillare (47) geöffnet worden ist.

In der Plattform nach Beispiel 2a laufen folgende Verfahrensschritte ohne Eingreifen von außen ab, wobei die Flüssigkeiten allein durch Kapillarkraft transportiert werden:
- Überleiten einer Teilmenge der vorgelegten Flüssigkeit aus der Einfullkammer (31) in die Sammelkammer (32),
- Einleiten einer dosierten Teilmenge aus der eingefüllten Flüssigkeit über Kapillare (34) in die Kammer (35) bis zum Kapillarstopp (37) und Anhalten der Flüssigkeit für eine vorgegebene Zeitspanne,
- Trennen der dosierten Teilmenge von dem Rest der begrenzten Flüssigkeitsmenge, nachdem das Ende der Flüssigkeitsströmung aus der Kammer (31) in die Kammer (32) den Eingang der Kapillare (34) passiert hat,
- Aufnehmen des in der Kammer (3 5) vorgelegten ersten Reagenz und Reaktion zwischen zu untersuchender Flüssigkeit und dem ersten Reagenz während einer vorgegebenen Verweilzeit der Flüssigkeit in der Kammer (35),
- Weiterleiten der Flüssigkeit aus der Kammer (35) in die Kammer (41), nachdem der fluidische Schalter nach Ablauf der vorgegebenen Stoppzeit geöffnet worden ist,
- Aufnehmen des in der Kammer (41) vorgelegten zweiten Reagenzes und Reaktion zwischen zu untersuchender Flüssigkeit und dem zweiten Reagenz.

In der Ausführung der Plattform nach Figur 2 a schließen sich die folgenden Verfahrensschritte an:
- Weiterleiten der gesamten Flüssigkeit aus der Kammer (41) in das Saugkissen im Hohlraum (43),
- Einleiten einer Flüssigkeit, die die Kammer (35) nicht passiert hat, aus der Eingabekammer (44),
- "Waschen" der in der Kammer (41) vorhandenen festen Stoffe mittels der Flüssigkeit aus Kammer (44) durch Weiterleiten der Flüssigkeit in das Saugkissen im Hohlraum (43),
- Füllen der Kammer (41) mit Flüssigkeit, die die Kammer (35) nicht passiert hat, aus Kammer (44), nachdem die Flüssigkeit aus Kammer (41) vom Saugkissen weitgehend aufgesaugt ist.
- visuelles Beurteilen oder Photometrieren der Veränderung, die in der Analysenkammer (41) eingetreten oder ausgeblieben ist.

In der Ausführung der Plattform nach Figur 2 b schließen sich die folgenden Verfahrensschritte an:
- Weiterleiten der Flüssigkeit aus der Kammer (41) bis zum Kapillarstopp (51) und Anhalten der Flüssigkeit am Kapillarstopp (51),
- Ableiten eines Teils der Flüssigkeit aus der Kammer (41) über die Steuerkapillare (47) zum fluidischen Schalter mit dem Kapillarstopp (46) und Öffnen dieses fluidischen Schalters,
- Zuleiten der Flüssigkeit aus der Kammer (44) zur Kammer (41),
- Öffnen des fluidischen Schalters durch die Flüssigkeit, die über die Steuerkapillare (52) der erweiterten Kapillare (53) zugeführt wird, nachdem die Kammer (44) strömungsmäßig an die Kammer (41) angeschlossen ist,
- "Waschen" der in der Kammer (41) vorhandenen festen Stoffe mittels der Flüssigkeit aus Kammer (44) durch Weiterleiten der Flüssigkeit in das Saugkissen im Hohlraum (43),
- Füllen der Kammer (41) mit Flüssigkeit, die die Kammer (35) nicht passiert hat, aus Kammer (44), wobei dei Flüssigkeit aus Kammer (44) in die Kammer (41) eintritt, bevor die Flüssigkeit aus Kammer (35) die Kammer (41) verlassen hat,
- visuelles Beurteilen oder Photometrieren der Veränderung, die in der Analysenkammer (41) eingetreten oder ausgeblieben ist.

In der Ausführung der Plattform nach Figur 2 b wird die Flüssigkeit, die aus Kammer (35) über Kammer (41) in die Kapillare (42) eingetreten ist, so lange angehalten, bis die Reaktion der Flüssigkeit aus Kammer (35) mit dem Reagenz in Kammer (41) abgelaufen ist. Danach wird der fluidische Schalter mittels der Flüssigkeit aus der Steuerkapillare (52) geöffnet. Die aus Kammer (35) stammende Flüssigkeit wird vollständig von dem Saugkissen im Hohlraum (43) aufgenommen. Für die optische Beurteilung der Veränderung, die in der Analysenkammer (41) eingetreten oder ausgeblieben ist, kann die Kammer (41) mit "Waschflüssigkeit" aus Kammer (44) gefüllt sein, oder Kammer (41) kann frei von Flüssigkeit sein. Im ersten Fall ist das Saugkissen im Hohlraum (43) mit Flüssigkeit bereits gesättigt, bevor die gesamte in Kammer (44) vorgelegte (und die aus Kammer (35) stammende) Flüssigkeit über Kammer (44) abgeflossen ist. Im zweiten Fall ist die gesamte in Kammer (44) vorgelegte (und die aus Kammer (35) stammende) Flüssigkeit in das Suagkissen geflossen, bevor das Saugkissen mit Flüssigkeit gesättigt ist.

### Beispiel 2b : Nachweis von humanem chorionalem Gonadotropin (hcG) mit internem Waschschritt mittels einer Plattform mit zwei Reaktionskammern und mehreren fluidischen Schaltern

Zum Nachweisen von hcG in Urin ist die erste Reaktionskammer (35) als Resuspensionskammern ausgebildet. Sie enthält resuspendierbare eingetrocknete mit Farbstoff markierte hcG-Antikörper erster Art. Die zweite Reaktionskammer (41) enthält an ihrer Innenfläche immobilisierte und nicht resuspendierbare hcG-Antikörper zweiter Art, welche für ein anderes Epitop des hcG-Hormons spezifisch sind.

Der Nachweis läuft wie folgt ab: Die Urinprobe wird mittels einer Pipette oder Spritze in die Eingabekammer (31) eingebracht, und die Eingabekammer wird gefüllt. Die Flüssigkeit strömt durch Kapillarkraft über Kapillare (33) in die Sammelkammer (32) und über Kapillare (34) in die Resuspensionskammer (35) und füllt diese Kammer und die engere Kapillare (36), bis die Strömung am Kapillarstopp (37) angehalten wird. Aus der engeren Kapillare (36) tritt ein Teilstrom der Flüssigkeit in die mäanderförmige Steuerkapillare (38) ein, der erst nach Ablauf einer Stoppzeit die erweiterte Kapillare (39) erreicht und den fluidischen Schalter öffnet. Die Stoppzeit des fluidischen Schalters mit der Steuerkapillare (38) beträgt etwa 1 Minute.

Die vorgelegte Flüssigkeit nimmt in der Resuspensionskammer die resuspendierbaren eingetrockneten hcG-Antikörper erster Art auf. An hcG gebundene und gegebenenfalls im Überschuß vorhandene ungebundene Antikörper erster Art fließen mit der Flüssigkeit in die Reaktionskammer (41). Dort binden hcG-Antikörper erster Art an Antikörper zweiter Art. Es entsteht ein in der Reaktionskammer fixierter sandwichartiger Molekülkomplex. Die Flüssigkeit in der Reaktionskammer (41) enthält gegebenenfalls ungebundene suspendierte mit Farbstoff markierte hcG-Antikörper erster Art. Diese sind aus der Reaktionskammer (41) auszuspülen, bevor der in der Kammer fixierte Molekülkomplex nachgewiesen werden kann. Andernfalls erschwert oder verhindert die Eigenfarbe der resuspendierten hcG-Antikörper erster Art diesen Nachweis. Dieser Waschschritt ist praktisch zwingend erforderlich.

In die Eingabekammer (44) wird eine zweite Flüssigkeit eingefüllt, die als Waschflüssigkeit benutzt wird, um die in der Reaktionskammer (41) gegebenenfalls vorhandenen nicht an hcG gebundenen resuspendierten Antikörper erster Art aus der Reaktionskammer auszuspülen. Die zweite Flüssigkeit kann mit der in die Eingabekammer (31) eingefüllten Flüssigkeit identisch sein, oder sie kann davon verschieden sein, zum Beispiel destilliertes Wasser. Die Kammer (44) wird gleich nach dem Füllen der ersten Kammer oder zu einem späteren Zeitpunkt mit der zweiten Flüssigkeit gefüllt. Der zeitliche Abstand zwischen dem Füllen der beiden Kammern (31) und (44) richtet sich nach den Reaktionen, die in den Kammern (35) und (41) ablaufen, oder nach anderen Gesichtspunkten.

Die in die Kammer (44) eingefüllte Flüssigkeit strömt durch die Kapillare (45) zum fluidischen Schalter, der den Kapillarstopp (46) am Ende der engeren Kapillare (45), die erweiterte Kapillare (48) und die Steuerkapillare (47) umfasst. Die erweiterte Kapillare (48) ist über die Kapillare (49) mit der Kammer (41) verbunden. Die Steuerkapillare (47) zweigt aus der Kapillare (42) ab. Die Steuerkapillare wird gefüllt, nachdem die Kammer (41) mit Flüssigkeit aus Kammer (35) vollständig gefüllt worden ist und diese Flüssigkeit den Kapillarstopp (51) erreicht hat. Die Steuerflüssigkeit erreicht den Kapillarstopp (48) und öffnet diesen fluidischen Schalter, bevor der fluidische Schalter am Kapillarstopp (51) geöffnet wird. Die Waschflüssigkeit tritt aus der Einfüllkammer (44) in die Reaktionskammer (41) ein. Die dort vorhandene Flüssigkeit, die über die Resuspensionskammer (35) eingeströmt ist, und die gegebenenfalls resuspendierte nicht an hcG gebundene Antikörper enthält, wird verdrängt und durch die "Waschflüssigkeit" aus der Kammer (44) ersetzt.

Falls in der vorgelegten Flüssigkeit kein hcG vorhanden ist, enthält die Flüssigkeit in Kammer (41) keine agglutinierten Latex-Partikel. Falls in der vorgelegten Flüssigkeit hcG vorhanden ist, enthält die Flüssigkeit in Kammer (41) agglutinierte Latex-Partikel, die am erhöhten Gehalt an Farbstoff erkennbar sind, im Gegensatz zu nicht agglutinierten Latex-Partikeln, die nicht erkennbar sind.

Wenn die Kammer (41) groß genug ist und visuell zu erkennen ist, kann der erfahrene Beobachter qualitativ entscheiden, ob in der vorgelegten Flüssigkeit hcG vorhanden ist oder nicht. Für Reihenuntersuchungen kann die Farbtiefe automatisch photometrisch gemessen werden.

Als "Waschflüssigkeit" ist eine Flüssigkeit zu benutzen, die keine resuspendierten hcG-Antikörper erster Art enthält. Die "Waschflüssigkeit" darf also nicht über die Resuspensionskammer (35) geflossen sein.

Wird die Kapillare (45) an die Sammelkammer (32) angeschlossen, kann der überschüssige Teil der Urinprobe selbst als "Waschflüssigkeit" benutzt werden. Der Waschvorgang wird auch bei dieser Ausführungsform eingeleitet, sobald der fluidische Schalter mit dem Kapillarstopp (46) und der Steuerkapillare (47) sowie der fluidische Schalter mit dem Kapillarstopp (51) und der Steuerkapillare (52) geöffnet worden ist.

In der Analysenkammer (41) wird der Gehalt an hcG analog zu dem in Beispiel 1b angegebenen Verfahren bestimmt.

### Beispiel 3a : Plattform mit Dosiereinrichtung, zwei fluidischen Schaltern und drei Reaktionskammern in zwei Analysenzweigen

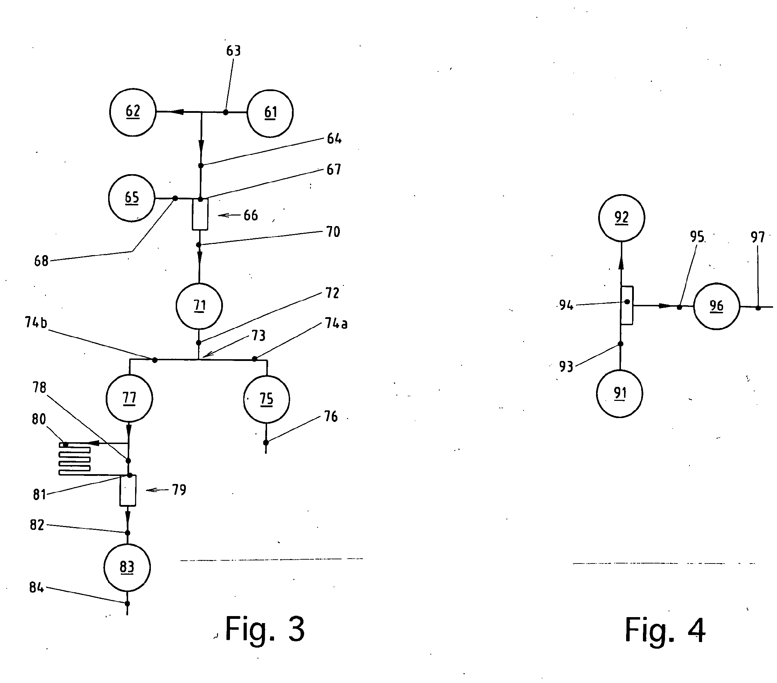

Die in der schematischen Figur 3 dargestellte Plattform urrirässt den Einlass (61), der durch die Kapillare (63) mit dem Auslass (62) verbunden ist. Aus der Kapillare (63) zweigt die Kapillare (64) ab, die zu dem fluidischen Schalter mit einen Kapillarsprung als geometrischem Kapillarstopp (67) am Ende der engeren Kapillare (64) führt. In die erweiterte Kapillare (66) des fluidischen Schalter mündet die Steuerkapillare (68), die mit dem Hohlraum (65) verbunden ist. Weiter ist der fluidischer Schalter durch die Kapillare (70) mit dem Hohlraum (71) verbunden, an den sich die Kapillare (72) anschließt, die zu der Verzweigungsstelle (73) führt. An der Verzweigungsstelle (73) teilt sich die Kapillare (72) in die beiden Kapillaren (74a) und (74b). Das Volumenverhältnis der beiden Teilströme kann über das Verhältnis der Querschnittsflächen der verzweigten Kapillaren eingestellt werden.

Die Kapillare (74a) führt zum Hohlraum (75), aus dem eine Kapillare (76) mit offenem Ende herausführt. Die Kapillare (74b) führt zum Hohlraum (77), aus dem die Kapillare (78) zum fluidischen Schalter führt, der den geometrischen Kapillarstopp (81) am Ende der engeren Kapillare (78) und die mäanderförmige Steuerkapillare (80) umfaßt. Die mäanderförmige Steuerkapillare zweigt aus der Kapillare (78) ab. Der fluidische Schalter ist durch die erweiterte Kapillare (79) und die Kapillare (82) mit dem Hohlraum (83) verbunden, aus dem eine Kapillare (84) mit offenem Ende herausführt. Die Hohlräume und Kapillaren der Plattform sind gedeckelt, ausgenommen der Einlass (61), der Auslass (62) und der Hohlraum (65). Die offenen Enden der Kapillaren (76) und (84) dienen zum Entlüften der gedeckelten Mikrostrukturen, sobald die zu handhabende Flüssigkeit in die Kapillare (64) eintritt.

In den Einlass (61) wird eine begrenzte Teilmenge der zu handhabenden Flüssigkeit eingegeben. In den Hohlraum (65) wird eine zweite Flüssigkeit eingegeben, nachdem sich die dosierte Teilmenge der zu handhabenden Flüssigkeit von dem Rest der in den Einlass (61) eingegebenen zu handhabenden Flüssigkeit getrennt hat

In der Plattform nach Beispiel 3a laufen folgende Verfahrensschritte ohne Eingreifen von außen ab, wobei die Flüssigkeiten allein durch Kapillarkraft transportiert werden:
- Überleiten einer Teilmenge der zu handhabenden Flüssigkeit aus dem Einlass (61) in den Auslass (62),
- Einleiten der zu handhabenden Flüssigkeit in die Kapillare (64) und Anhalten der Flüssigkeit am Kapillarstopp (67),
- Trennen der dosierten Teilmenge von dem Rest der zu handhabenden Flüssigkeit, nachdem das Ende der Flüssigkeitsströmung aus dem Einlass (61) in den Auslass (62) den Eingang der Kapillare (64) passiert hat,
- Öffnen des fluidischen Schalters durch die über die Steuerkapillare (68) in die erweiterte Kapillare (66) eintretende Flüssigkeit aus dem Hohlraum (65), die eine Flüssigkeit zum Verdünnen der dosierten Teilmenge aus Kapillare (64) sein kann,
- gemeinsame Strömung der dosierten Teilmenge aus der Kapillare (64) und dem Hohlraum (65) über Kapillare (70) in den Hohlraum (71), der als Mischkammer für die beiden gemeinsam eintretenden Flüssigkeiten ausgelegt sein kann; in der Mischkammer vermischen sich die beiden Flüssigkeiten bevorzugt duch Diffusion,
- Weiterleiten der durchmischten Flüssigkeit aus dem Hohlraum (71) zur Verzweigungsstelle (73) und Aufteilen des Flüssigkeitsstroms auf die Kapillaren (74a) und (74b),
- Reaktion eines im Hohlraum (75) vorgelegten Reagenz mit der verdünnten zu handhabenden Flüssigkeit, die in die Kapillare (76) eintritt und am Kapillarstopp am Ende der Kapillare (76) angehalten wird,
- Reaktion eines im Hohlraum (77) vorgelegten Reagenz mit der verdünnten zu handhabenden Flüssigkeit, die in die Kapillare (78) eintritt und am Kapillarstopp (81) für eine vorgegebene Stoppzeit angehalten wird, bis die Steuerflüssigkeit aus der Steuerkapillare (80) den fluidischen Schalter öffnet,
- Weiterleiten der Flüssigkeit aus dem Hohlraum (77) in den Hohlraum (83),
- Reaktion eines im Hohlraum (83) vorgelegten Reagenz mit der verdünnten zu handhabenden Flüssigkeit, die in die Kapillare (84) eintritt und am Kapillarstopp am Ende der Kapillare (84) angehalten wird,
- visuelles Beurteilen oder Photometrieren der Veränderungen, die in den Hohlräumen (75) und (83) eingetreten oder ausgeblieben sind.

In den Teilströmen über die Kapillaren (74a) und (74b) laufen unterschiedliche Reaktion nebeneinander ab. Das Ergebnis der beiden Reaktionen wird an Hand eines optischen Merkmals an den Flüssigkeiten ermittelt, die in den Hohlräumen (75) und (83) enthalten sind. Diese beiden Hohlräume sind die Analysenkammern.

Die in Figur 3 dargestellte Plattform kann zum Beispiel wie folgt modifiziert werden:
- Falls die zu handhabende Flüssigkeit nicht verdünnt werden soll, oder falls die zu handhabende Flüssigkeit außerhalb der Plattform vor dem Eingeben in den Einlass (61) verdünnt worden ist, können die Hohlräume (65) und (71) sowie die Kapillare (68) entfallen.
- Falls eine undosierte Menge der zu handhabende Flüssigkeit untersucht werden soll, kann die zu handhabende Flüssigkeit in den Hohlraum (71) gegeben werden. Die vor dem Hohlraum liegenden Mikrostrukturen (61) bis (68) können entfallen. Es kann zweckmäßig sein, die Kapillare (70) beizubehalten und die zu handhabende Flüssigkeit in den Eingang dieser Kapillare eintreten zu lassen.Die eingegebene Menge muß hinreichend groß sein, damit die nachgeschalteten Mikrostrukturen in beiden Zweigen bis zum offenen Ende der Kapillaren (76) und (84) mit der Flüssigkeit gefüllt werden.
- Falls zum Vorbehandeln der zu handhabenden Flüssigkeit mehrere Reagenzien eingesetzt werden, können diese in den Hohlräumen(61) und/oder (65) und/oder (71) untergebracht sein.
- Ein eingetrocknetes Reagenz kann - außer in einem Hohlraum - in einer Kapillare untergebracht sein.
- Die Hohlräume, in denen Reagenzien untergebracht werden, können bereichsweise mit Mikrostrukturen zum Zusammenhalten einer begrenzten Flüssigkeitsmenge versehen sein. In derartigen Bereichen kann eine begrenzte Flüssigkeitsmenge zusammen gehalten werden, die größer ist als die in gleich großen Bereichen ohne Mikrostrukturen zusammenhaltbare Flüssigkeitsmenge.
- Der Hohlraum (65) kann eine vorgegebene dosierte Menge einer Flüssigkeit enthalten, die vor dem Deckeln der Plattform eingegeben wird. In diesem Fall ist der Hohlraum (65) gedeckelt und hat zunächst keine Verbindung zur Kapillare (68). Zum Benutzen der Plattform wird die Sperre zwischen Hohlraum (65) und Kapillare (68) - zum Beispiel durch Daumendruck oder durch Anstechen mit einer Nadel - geöffnet. Gleichzeitig wird der Hohlraum mit einer Belüftungsöffnung versehen. Damit kann das Einfüllen einer Flüssigkeit beim Benutzen der Plattform umgangen werden, was speziell bei einer sehr kleinen Flüssigkeitsmenge - die mühsam zu dosieren ist - im Hohlraum (65) zweckmäßig sein kann.

### Beispiel 3b : Immunochemische Bestimmung von HbA1c und Hb in Blut mittels einer Plattform mit Dosiereinrichtung, zwei fluidischer Schaltern und drei Reaktionskammern in zwei Analysenzweigen

Zum Bestimmen des Hämoglobin-Gehalts Hb und des Gehalts an Hämoglobin-Alc in Vollblut kann die in Beispiel 3a angegebene Plattform benutzt werden, die mit folgenden Reagenzien versehen ist:
- Die Reaktionskammer (75) enthält in eingetrockneter Form 10 µg (33 µmol) Ferricyanid K3 (Fe(CN)6) pro µl Vollblut.
- Die Reaktionskammer (77) enthält einen HbAlc-Antikörper, zum Beispiel einen polyklonalen HbAlc-Antikörper, und ein Detergenz (zum Beipiel Natrium-dodecylsulfat) in eingetrockneter Form.
- Die Reaktionskammer (83) enthält einen eingetrockneten Polyhapten-Agglutinator.
- Zum späteren Einfüllen in den Hohlraum (65) wird eine wässrige Lösung eines Puffers (zum Beispiel 0, 1 mol Phosphatpuffer bei pH = 7,0) und eines Lysereagenz (zum Beispiel 10 µg Saponin pro µl Vollblut) zum Verdünnen und Lysieren von Vollblut bereitgehalten.

Die Bestimmung verläuft wie folgt:
In den offenen Einlass (61) wird etwa ein Tropfen Vollblut eingegeben, der durch die Kapillare (63) zum Auslass (62) transportiert wird. Die Dosierkapillare (64) hat zwischen ihrer Abzweigung von der Kapillare (63) und dem Kapillarstopp (67) ein Volumen von 1 µl. Die Kapillare (64) füllt sich mit Vollblut. Sobald das Ende der Strömung in der Kapillare (63) die Abzweigung der Kapillare (64) passiert hat, ist die dosierte Blutmenge in der Dosierkapillare (64) von dem restlichen Blut getrennt.

Anschließend werden in den Hohlraum (65) 55 µl der bereit gehaltenen wässrigen Lösung aus Puffer und Lysereagenz eingegeben. Diese Lösung wird durch Kapillarkraft über die Steuerkapillare (68) zum fluidischen Schalter transportiert, wo sie in die erweiterte Kapillare (66) eintritt, und den fluidischen Schalter öffnet.

Die dosierte und abgetrennte Menge Vollblut wird aus Kapillare (64) zusammen mit der wässrigen Lösung aus Hohlraum (65) über die Kapillare (70) zum Hohlraum (71) transportiert. Beide Flüssigkeiten mischen sich bevorzugt durch Diffusion. Die dosierte Menge Vollblut wird verdünnt, und die Blutzellen werden durch das Lysereagenz lysiert.

Der Hohlraum (71) hat ein Volumen von etwa 60 µl. Nach etwa 1 Minute sind die etwa 55 µl verdünntes Blut mit lysierten Blutzellen in den Hohlraum (71) transportiert worden. Die Flüssigkeit wird mittels Kapillarkraft durch die Kapillare (72) zur Verzweigung (73) transportiert. Dort teilt sich der Flüssigkeitsstrom in zwei etwa gleich große Teilströme.

Über Kapillare (74 a) werden etwa 25 µl zum Hohlraum (75) transportiert. Die Kapillare (76) wird gefüllt. Am offenen Ende der Kapillare (76), das als geometrischer Kapillarstopp ausgebildet ist, wird die Strömung angehalten. Die Kapillare (76) und der Hohlraum (75) mit einem Volumen von etwa 20 µl sind mit Flüssigkeit gefüllt. Die Flüssigkeit löst das eingetrocknete Reagenz in Hohlraum (75) auf, und das Hämoglobin reagiert mit dem Reagenz.

Über Kapillare (74 b) werden etwa 25 µl zum Hohlraum (77) transportiert. Dort reagiert die Flüssigkeit mit dem vorgelegten Reagenz. Die Flüssigkeit wird am Kapillarstopp (81) angehalten. Nachdem die Stoppzeit von etwa 80 Sekunden am fluidischen Schalter abgelaufen ist, wird der fluidische Schalter durch die Flüssigkeit, die über die Steuerkapillare (80) herangeführt wurde und in die erweiterte Kapillare (79) eingetreten ist, geöffnet. Die Flüssigkeit wird durch Kapillarkraft zum Hohlraum (83), der ein Volumen von etwa 12 µl hat, weitertransportiert, und die Kapillare (84) wird gefüllt. Am offenen Ende der Kapillare (84), das als geometrischer Kapillarstopp ausgebildet ist, wird die Strömung angehalten. Die Kapillare (84) und der Hohlraum (83) und ein Teil der Kapillare (82) sind mit Flüssigkeit gefüllt. Die erweiterte Kapillare (79) und der Hohlraum (77) sind praktisch frei von Flüssigkeit. Die Flüssigkeit im Hohlraum (83) reagiert mit dem Agglutinator.

Der Gehalt an Hb und HbAlc wird in den Analysenkammern (75) und (83) durch Trübungsmessung bestimmt.

### Beispiel 4a: Plattform mit Kapillarspalt und Dosiereinrichtung

Die in der schematischen Figur 4 dargestellte Plattform umfasst den Einlass (91), der durch die Kapillare (93) mit dem Auslass verbunden ist. Aus der Kapillare (93) zweigt der Kapillarspalt (94) ab, der über die Kapillare (95) mit dem Hohlraum (96) verbunden ist. Aus dem Hohlraum (96) führt die Kapillare (97), deren offenes Ende zum Entlüften der gedeckelten Mikrostrukturen dient, sobald die zu handhabende partikelhaltige Flüssigkeit in den Kapillarspalt eintritt. Das Volumen zwischen dem Eintritt in den Kapillarspalt (94) und dem offenen Ende der Kapillare (97) ist durch die Mikrostruktur vorgegeben; dieses Volumen enthält die dosierte Menge der über den Kapillarspalt abgetrennten Teilmenge der Flüssigkeit.

In den Einlass (91) wird eine begrenzte Teilmenge der zu handhabenden partikelhaltigen Flüssigkeit eingegeben. Der Hohlraum (96) kann ein eingetrocknetes Reagenz enthalten.

In der Plattform nach Beispiel 4a laufen folgende Verfahrensschritte ohne Eingreifen von außen ab, wobei die zu handhabende Flüssigkeit allein durch Kapillarkraft transportiert wird.
- Überleiten einer Teilmenge der zu handhabenden Flüssigkeit aus dem Einlass (91) in den Auslass (92),
- Einleiten der zu handhabenden Flüssigkeit in den Kapillarspalt (94) und Abtrennen einer Teilmenge aus der zu handhabenden partikelhaltigen Flüssigkeit,
- Weiterleiten der abgetrennten Teilmenge über Kapillare (95) in den Hohlraum (96),
- Füllen des Hohlraums (96) und gegebenenfalls Reagieren des im Hohlraum (96) vorgelegten Reagenz mit der abgetrennten Teilmenge der Flüssigkeit,
- Füllen der Kapillare (97) bis zum Kapillarstopp am offenen Ende der Kapillare (97),
- Anhalten des Flüssigkeitsstromes, sobald die Flüssigkeit das offene Ende der Kapillare (97) erreicht hat,
- visuelles Beurteilen oder Photometrieren der Veränderungen, die im Hohlraum (96) eingetreten oder ausgeblieben sind.

Die in Figur 4 dargestellte Plattform kann zum Beispiel wie folgt modifiziert werden:
- Der Hohlraum (96) schließt sich unmittelbar an den Kapillarspalt an, die Kapillare (95) entfällt.
- Die Kapillare (97) führt in mindestens einen weiteren Hohlraum; der letzte von mehreren aufeinander folgenden Hohlräumen ist mit einer Kapillare versehen, die ein offenes Ende hat.
- Aus der Kapillare (93) zweigen in einem Abstand voneinander mehrere Kapillarspalte ab, die jeweils mit mindestens einem Hohlraum verbunden sind. Die mehreren Zweige können ein unterschiedlich großes Volumen haben und für unterschiedliche Analysen benutzt werden, die praktisch gleichzeitig ablaufen.

### Beispiel 4b: Bestimmung von Glukose in Blutplasma mittels einer Plattform mit Kapillarspalt und Dosiereinrichtung

Die in Beipiel 4a angegebene Plattform enthält im Hohlraum (96) eingetrocknetes Trinder-Reagenz, welches Glukose-Oxidase und Peroxidase sowie zum Beispiel 4-Aminoantipyrin als (zunächst roten) Indikator-Farbstoff. enthält. Beim Oxidieren von Glukose entstehen Glukonsäure und Wasserstoff-Peroxid, das durch Peroxidase zu.Wasser reduziert wird. Durch den dabei frei werdenden Sauerstoff wird der (zunächst rote) Indikator-Farbstoff in einen blauen Farbstoff umgewandelt. Die Extinktion bei der Wellenlänge 500 nm ist proportional zur Konzentration der Glukose im Plasma.

Die Bestimmung verläuft wie folgt:
In den offenen Einlass (91) werden mehrere Tropfen Vollblut eingegeben, die durch die Kapillare (93) zum Auslass (92) mittels Kapillarkraft transportiert werden. Sobald der Blutstrom am Kapillarspalt (94) vorbei fließt, tritt ein Teil des Plasmas in den Kapillarspalt ein. Das abgetrennte Plasma ist frei von Blutkörpern; es fließt über Kapillare (95) in den Hohlraum (96), füllt diesen Hohlraum und die Kapillare (97). Sobald die Strömung das offene Ende der Kapillare (97) erreicht hat, wird die Strömung in Kapillare (95) und im Hohlraum (96) am Kapillarstopp angehalten.

Das im Hohlraum (96) enthaltene Plasma resuspendiert das eingetrocknete Trinder-Reagenz, welches mit der im Plasma enthaltenen Glukose reagiert. Dabei färbt sich das Plasma im Hohlraum (96) blau. Die Extinktion bei 500 nm ist ein quantitatives Maß für den Glukosegehalt im abgetrennten Plasma und damit im vorgelegten Vollblut.

### Beispiel 5a: Plattform mit mehreren Hohlräumen, Waschvorrichtung und mehreren fluidischen Schaltern

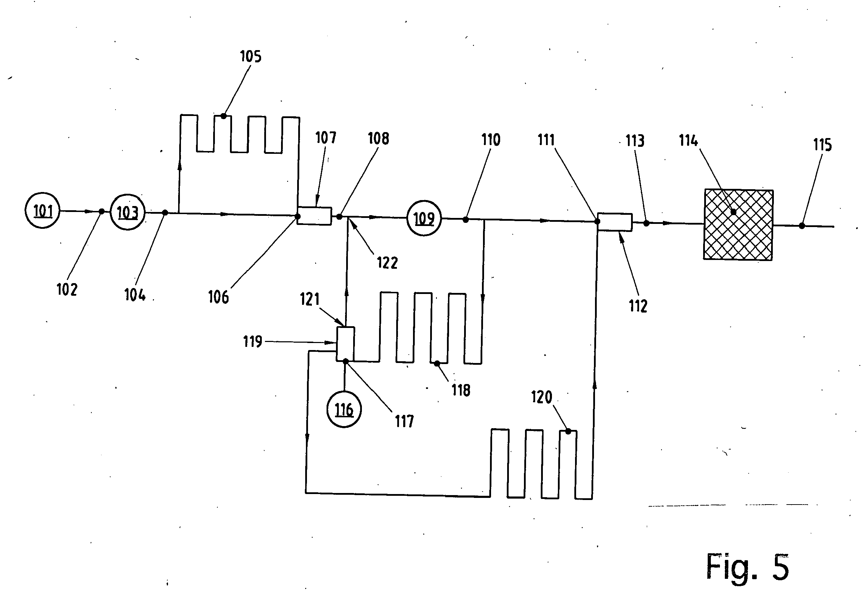

Die in der schematischen Figur 5 dargestellte Plattform umfaßt den ersten Einlass (101), der durch die erste Kapillare (102) mit dem ersten Hohlraum (103) verbunden ist. Die zweite Kapillare (104 mit 108) verbindet den ersten Hohlraum (103) mit dem zweiten Hohlraum (109). Vor dem zweiten Hohlraum (109) befindet sich der erste fluidische Schalter (107). Die erste Steuerkapillare (105) zweigt aus der zweiten Kapillare (104) ab und führt zum Kapillarstopp (106) im ersten fluidischen Schalter. Aus dem zweiten Hohlraum (109) führt die dritte Kapillare (110 mit 113) zum Auslass (114). Der Auslass (114) ist über die letzte Kapillare (115) mit der Umgebung verbunden. Das offene Ende der letzten Kapillare (115) ist mit einem Kapillarstopp versehen und dient zum Entlüften der gedeckelten Kapillaren und Hohlräume. Zwischen dem zweiten Hohlraum (109) und dem Auslass (114) ist der zweite fluidischer Schalter (112) angeordnet.

An der Stelle (122) zweigt die Verbindungskapillare aus der zweiten Kapillare (108) ab, die an der Stelle (121) zur erweiterten Kapillare des dritten fluldischen Schalters (119) führt. Aus der Kapillare (110) zweigt die zweite Steuerkapillare (118) ab, die in die erweiterte Kapillare zum Kapillarstopp (117) des dritten fluidischer Schalters (119) führt. Der dritte fluidische Schalter (119) ist über eine Kapillare mit dem zweiten Einlass (116) verbunden.

Von der erweiterten Kapillare des fluidischen Schalters (119) führt die dritte Steuerkapillare (120) in die erweiterte Kapillare zum Kapillarstopp (111) des zweiten fluidischen Schalters (112).

Der erste Hohlraum (103) ist in einem Bereich seines Bodens beispielsweise mit säulenartigen Mikrostrukturen zum Zusammenhalten einer begrenzten Menge einer Flüssigkeit versehen. Der erste Hohlraum (103) enthält in dem mit Mikrostrukturen versehenen Bereich eine erste Substanz, zum Beipiel eine eingetrocknete resuspendierbare Substanz. Der zweite Hohlraum (109) enthält ein Reagenz, zum Beispiel ein immobilisiertes Reagenz. Der Auslass (114) enthält ein Vlies, das als Saugkissen dient.

In den ersten Einlass (101) und in den zweiten Einlass (116) wird jeweils eine begrenzte Menge der zu handhabenden ersten beziehungsweise zweiten Flüssigkeit eingegeben, zum Beispiel ein Probenflüssigkeit in den ersten Einlass (101) und eine Waschflüssigkeit in den zweiten Einlass (116).

In der Plattform nach Beispiel 5a laufen folgende Verfahrensschritte ohne Eingreifen von außen ab, wobei die beiden zu handhabenden Flüssigkeiten allein durch Kapiliarkraft transportiert werden.
- Transportieren der Probenflüssigkeit aus dem Einlass (101) über Kapillare (102) in die Resuspensionskammer (103) und weiter bis zum Kapillarstopp (106) des ersten fluidischen Schalters (107),
- Resuspendieren der im ersten Hohlraum (103) vorgelegten eingetrockneten Substanz,
- Anhalten der Probenflüssigkeit am Kapillarstopp (106) für die Dauer der vorgegebenen Resuspensionszeit,
- Öffhen des fluidischen Schalters (107) nach Ablauf der vorgegebenen Resuspensionszeit durch die während der Resuspensionszeit über die Steuerkapillare (105) zum fluidischen Schalter (107) transportierte Teilmenge der Probenflüssigkeit aus der Kapillare (104),
- Transportieren der Probenflüssigkeit, die die resuspendierte Substanz aus der Resuspensionskammer enthält, zur Reaktionskammer (109) und weiter bis zum Kapillarstopp des zweiten fluidischen Schalters (112), sowie Eindringen der Probenflüssigkeit in die an der Verzweigung (122) angeschlossene Verbindungskapillare, die die Verbindungskapillare bis zum Kapillarstopp (121) füllt und am Kapillarstopp (121) angehalten wird,
- Reagieren der Probenflüssigkeit in der Reaktionskammer (109) mit dem vorgelegten immobiliserten Reagenz,
- Anhalten der Probenflüssigkeit am Kapillarstopp (111) und Reagieren der Probenflüssigkeit mit dem immobilisierten Reagenz in der Reaktionskammer während der Dauer der vorgegebenen Reaktionszeit,
- Öffnen des fluidischen Schalters (119) durch die aus der Kapillare (110) über die Steuerkapillare (118) abgezweigte Steuerflüssigkeit,
- Transportieren von Waschflüssigkeit aus dem Einlass (116) in die erweiterte Kapillare bis zum Kapillarstopp (121) und Anhalten der Waschflüssigkeit am Kapillarstopp (121),
- Öffnen des fluidischen Schalters (112) durch die aus dem fluidischen Schalter (119) über die Steuerkapillare (120) abgezweigte Teilmenge der Waschflüssigkeit nach Ablauf der vorgegebenen Reaktionszeit in der Reaktionskammer (109),
- Transportieren der Probenflüssigkeit, die mit dem immobilisierten Reagenz in der Reaktionskammer (109) reagiert hat, über den geöffneten fluidischen Schalter (112) zum Auslass (114) und Aufsaugen zunächst der reagierten Probenflüssigkeit durch das Vlies,
- Nachströmen der am Kapillarstopp (121) zunächst angehaltenen Waschflüssigkeit über die Verbindungskapillare zur Abzweigung (122) und weiter durch die Reaktionskammer (109) hindurch sowie durch die Kapillare (110 mit 113) zum Auslass (114), wobei die Waschflüssigkeit die zunächst in diesen Kapillaren und in der Reaktionskammer enthaltene Probenflüssigkeit vor sich her schiebt,
- Ausspülen der Probenflüssigkeit aus der Reaktionskammer mit Waschflüssigkeit.

Damit liegt in der Reaktionskammer (109) das gewaschene immobile Reaktionsprodukt aus einer reaktionsfähigen Komponente in der Probenflüssigkeit und dem in der Reaktionskammer vorgelegten immobilisierten Reagenz vor. Nach dem Waschvorgang enthält die Reaktionskammer praktisch keine Probenflüssigkeit und kein resuspendiertes Reagenz mehr. Die Reaktionskammer kann Waschflüssigkeit enthalten, oder die Waschflüssigkeit kann aus der Reaktionskammer praktisch vollständig herausgesaugt sein. Das immobile gewaschene Reaktionsprodukt in der Reaktionskammer wird nach einer auf die Art des Reaktionsproduktes abgestimmten Methode nachgewiesen.

### Beispiel 5b: Nachweis von humanem C-reaktiven Protein (CRP) in einer Flüssigkeit mittels einer Plattform mit mehreren Hohlräumen, Waschvorrichtung und mehreren fluidischen Schaltern

Die im Beispiel 5a angegebene Plattform enthält in der Resuspensionskammer (103) eingetrocknete resuspendierbare mit Fluoreszenzfarbstoff markierte anti-CRP Antikörper erster Art. Die Reaktionskammer (109) enthält nicht resuspendierbare immobilisierte anti-CRP Antikörper zweiter Art. Der Einlass (116) enthält eine gepufferte Waschflüssigkeit.

Die auf CRP zu untersuchende Probenflüssigkeit wird in den Einlass (101) gegeben und wird durch Kapillarkraft in die Resuspensionskammer und bis zum fluidischen Schalter (107) transportiert und dort angehalten. Während der Inkubationszeit von etwa 5 Minuten wird der mit Fluoreszenzfarbstoff markierte anti-CRP Antikörper erster Art in der Probenflüssigkeit resuspendiert, und das CRP wird an den resuspendierten Antikörper erster Art gebunden. Nach dem Öffnen des fluidischen Schalters (107) wird die Probenflüssigkeit durch Kapillarkraft in die Reaktionskammern (109) transportiert. Die Probenflüssigkeit enthält nun ungebundenen suspendierten markierten anti-CRP Antikörper erster Art sowie Komplexe aus CRP und markiertem anti-CRP Antikörper erster Art. In der Reaktionskammer (109) binden die markierten Komplexe an den in der Reaktionskammer immobilisierten anti-CRP Antikörper zweiter Art. Nach einer Inkubationszeit von etwa 5 Minuten ist die Reaktion beendet. Die Menge des mit Fluoreszenzfarbstoff markierten anti-CRP Antikörpers erster Art, die an den immobilisierten anti-CRP Antikörper zweiter Art gebunden ist, ist proportional zur CRP-Menge in der vorgelegten Probenflüssigkeit. Die Reaktionskammer wird nach dem Öffnen des fluidischen Schalters (112) mit Waschpuffer aus dem Einlass (116) gespült. Dabei wird ungebundener mit Fluoreszenzfarbstoff markierter suspendierter anti-CRP Antikörper erster Art aus der Reaktionskammer ausgewaschen und mit der Flüssigkeit in den Auslass (114) transportiert.

Der in der Reaktionskammer (109) enthaltene immobile Komplex aus mit Fluoreszenzfarbstoff markiertem anti-CRP Antikörper erster Art und immobilisiertem anti-CRP Antikörper zweiter Art, zwischen denen des CRP eingeschlossen ist, wird fluorimetrisch nachgewiesen. Der Fluoreszenzfarbstoff wird beispielsweise mit Licht der Wellenlänge 555 nm angeregt. Das Fluoreszenzlicht hat beispielweise die Wellenlänge 574 nm. Die Intensität des Fluoreszenzlichts ist proportional zur Menge des in der vorgelegten Probenflüssigkeit enthaltenen CRP.

### Beispiel 6: Plattform mit mehreren Dosierzweigen für die zu handhabende Flüssigkeit und mehreren Hohlräumen

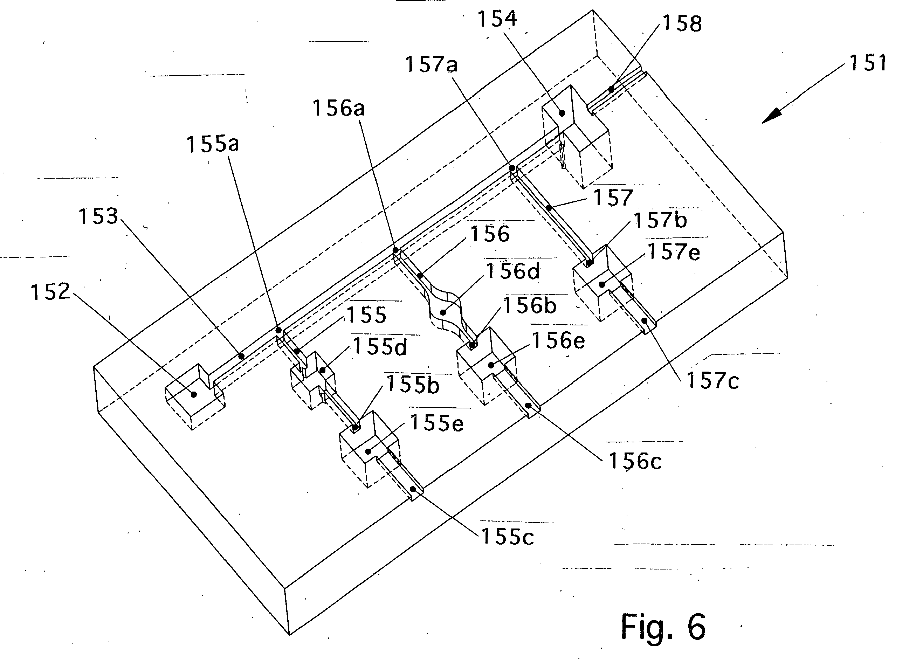

Figur 6 zeigt in Schrägansicht einen Ausschnitt **(151)** aus einer Plattform mit mikrostrukturierten Elementen zum Dosieren und Trennen einer Flüssigkeitsmenge und mit mehreren Hohlräumen. Die Plattform ist in ihrer gesamten Fläche gedeckelt. Der Deckel ist nicht dargestellt.

An der Einlasskammer (152) beginnt die erste Kapillare (153), die bis zur Auslasskammer (154) läuft. Von der ersten Kapillare (153) zweigen beispielsweise drei zweite Kapillaren (155, 156, 157) ab. Der Querschnitt jeder zweiten Kapillare ist an ihrem Anfang (155a, 156a, 157a) kleiner als der Querschnitt der ersten Kapillare im Bereich der Abzweigstelle. Jede zweite Kapillare reicht bis zu ihrem Ende (155b, 156b, 157b), an dem sich ein Kapillarsprung befindet, der als Kapillarstopp wirkt. An jeden Kapillarstopp schließt sich jeweils ein Hohlraum(155e, 156e, 157e) an, der zum Aufnehmen der jeweils dosierten Flüssigkeitsmenge vorgesehen ist, sobald die am Kapillarstopp anstehende dosierte Flüssigkeitsmenge zum Überwinden des Kapillarstopps veranlasst worden ist. Die dazu erforderlichen Mittel sind in Figur 6 nicht dargestellt.

Zwischen dem Anfang und dem Ende der beiden zweiten Kapillaren (155) und (156) ist jeweils eine Erweiterung (155d) und (156d) vorgesehen. Das Volumen jeder zweiten Kapillare zwischen ihrem Anfang an der Abzweigstelle aus der ersten Kapillare und dem Kapillarstopp in der zweiten Kapillare bestimmt das zu dosierende und abzutrennende Teilvolumen der Flüssigkeit.

Die Erweiterung (155d) der zweiten Kapillare (155) ist als kastenförmiger Hohlraum ausgebildet, der tiefer ist als die zweite Kapillare (155) an ihrem Eintritt in diesen Hohlraum. Die beiden Wände des Hohlraumes (155d), in denen die Kapillare (155) in diesen Hohlraum eintritt und aus diesem Hohlraum austritt, sind jeweils als Kapillarsprung ausgebildet und mit jeweils einer keilförmigen Kerbe versehen, die vom Boden der Kapillare bis zum Boden des Hohlraums reicht. Die Wirkung dieser beiden keilförmigen Kerben ist weiter unten beschrieben.

Die Erweiterung (156d) der zweiten Kapillare (156) ist als seitliche Ausbuchtung der zweiten Kapillare ausgebildet. Der Boden dieser Ausbuchtung (156d) geht glatt in den Boden der eintretenden und der austretenden Kapillare (156) über.

Der Hohlraum (154) am Ende der ersten Kapillare und die Hohlräume (155e, 156e, 157e), die sich an das Ende jeder zweiten Kapillare anschließen, werden über die an ihrem Ende offenen Entlüftungskanäle (158, 155c, 156c, 157c) entlüftet, sobald die zu handhabende Flüssigkeit in die Kapillare (153) eintritt, und sobald die abzutrennenden dosierten Teilmengen in die zweiten Kapillaren (155, 156, 15 7) eintreten.

Die zweite Kapillare (157) verläuft ohne Erweiterung von ihrem Anfang (157a) bis zu ihrem Ende (157b) in der Wand des Kapillarsprungs.

Die Volumina der drei zweiten Kapillaren jeweils zwischen ihrem Anfang (155a, 156a, 157a) und ihrem Ende (155b, 156b, 157b) sind unterschiedlich groß. Die mit der Kapillare (155) dosierte Teilmenge der Flüssigkeit ist am größten, die mit der Kapillare (156) dosierte Teilmenge der Flüssigkeit ist demgegenüber kleiner, und die mit der Kapillare (157) dosierte Teilmenge der Flüssigkeit ist am kleinsten.

Die in den beiden Kapillarsprüngen des Hohlraumes (155d) vorhandenen keilförmigen Kerben haben unterschiedliche Wirkungen. Die keilförmige Kerbe in der Wand des Kapillarsprunges, in der die Kapillare in den Hohlraum (155d) eintritt, ermöglicht das ununterbrochene Fließen der Flüssigkeit aus der Kapillare (155) über den Kapillarsprung hinweg in den Hohlraum (155d). Die keilförmige Kerbe in der Wand des Kapillarsprunges, in der die Kapillare aus dem Hohlraum (155d) austritt, veranlasst die dosierte Teilmenge der Flüssigkeit, aus dem Hohlraum (155) praktisch restlos in den Hohlraum (155e) zu fließen.

In der Wand des Kapillarsprungs, in der die Kapillare (153) in den Hohlraum (154) mündet, ist eine keilförmige Kerbe vorhanden, die das praktisch restlose Entleeren der Kapillare (153) bewirkt.

Vor dem Deckeln der Plattform werden in die Hohlräume (155e, 156e, 157e) jeweils eine vorgegebene Menge unterschiedlicher Reagenzien eingebracht und eingetrocknet. Die in jedem Zweig abgetrennte dosierte Teilmenge der zu handhabenden Flüssigkeit reagiert mit jeweils einem Reagenz, sobald die abgetrennte dosierte Teilmenge in die Hohlräume (155e, 156e, 157e) geflossen ist.

In der Plattform gemäß Figur 6 wird die zu untersuchende Flüssigkeit wie folgt gehandhabt:
Mittels einer Injektionsspritze, mit deren Kanüle der Deckel im Bereich des Einlasses (152) durchstochen wird, wird die zu handhabende Flüssigkeit in den Einlass eingegeben. Das eingegebene Volumen der Flüssigkeit ist etwas größer als die Summe der drei Teilvolumina, die in den drei Zweigen abgetrennt und dosiert werden. Die Mikrostruktur wird über die zur Umgebung offenen Enden der Entlüftungskanäle (158, 155c, 156c, 157c) entlüftet. Die zu handhabende Flüssigkeit fließt mittels Kapillarkraft durch die Kapillare (153) in Richtung auf den Auslass (154). An jeder Abzweigstelle (155a, 156a, 157a) tritt mittels Kapillarkraft ein Teil der Flüssigkeit in die Kapillaren (155, 156, 157) ein und füllt diese bis zum jeweiligen Kapillarstopp (155b, 156b, 157b). Der Überschuß der in den Einlass eingegebenen Flüssigkeit fließt in den Auslass (154). Sobald die gesamte in den Einlass eingegebene Flüssigkeit den Einlass verlassen hat, passiert das Ende des Flüssigkeitsstromes nacheinander den Anfang der Kapillaren (155, 156, 157). Dabei wird die in den Kapillaren jeweils enthaltene dosierte Teilmenge von dem Rest der Flüssigkeit abgetrennt.

Das Ende des Entlüftungskanals (158) wird verschlossen. Die Kanüle der benutzten mit Luft gefüllten Spritze wird in den Einstich im Deckel der Plattform im Bereich des Einlasses eingeführt, und die Luft wird stoßartig in den Einlass gespritzt. Der Druckstoß zwingt die in jedem Zweig vorhandenen dosierten Flüssigkeitsmengen zum Überwinden des jeweiligen Kapillarstopps. Die dosierten Teilmengen fließen in die jeweils zugeordneten Hohlräume (155e, 156e, 157e).

In den Hohlräumen läuft jeweils eine Reaktion zwischen der dosierten abgetrennten Teilmenge der zu handhabenden Flüssigkeit und dem in jedem Hohlraum in vorgegebener Menge vorgelegten Reagenz ab. Die Reaktionen laufen parallel zueinander und praktisch gleichzeitig ab.

Nach dem Ende der Reaktionen werden die Veränderungen, die in jedem Hohlraum eingetreten oder ausgeblieben sind, visuell beurteilt oder photometriert. Die Hohlräume (155e, 156e, 157e) sind die Reaktionskammern und die Analysenkammern.

Die in der erfindungsgemäßen Plattform vorhandenen mikrostrukturierten Elemente werden an Hand der folgenden Figuren weiter erläutert. Die Plattform kann nach oben offene Kapillaren und Hohlräume haben, oder die Kapillaren und Hohlräume können weitgehend mit einem Deckel bedeckt sein. Dieser Deckel ist in den Figuren nicht dargestellt.

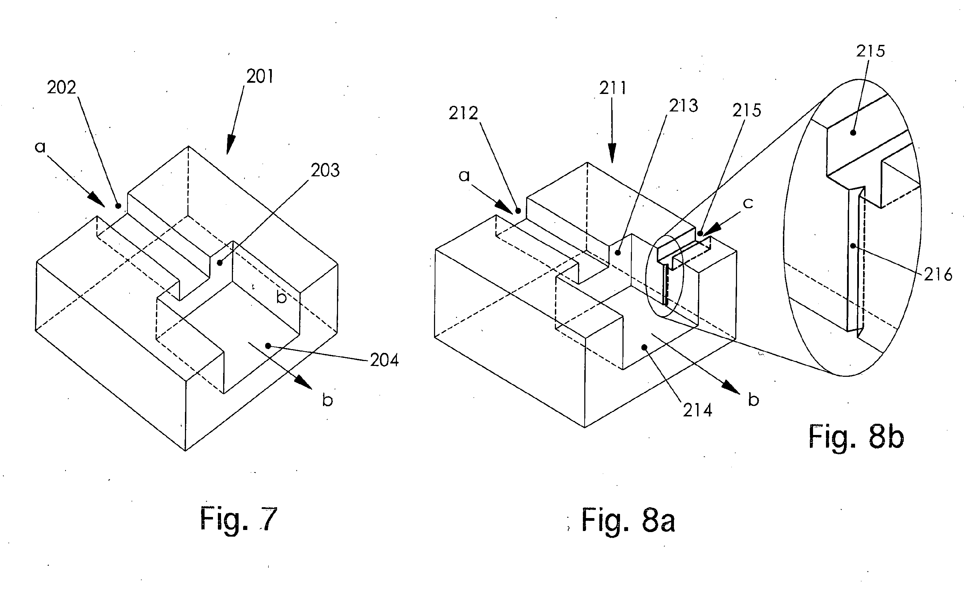

Figur 7 zeigt einen Ausschnitt (201) aus der Plattform in Schrägansicht von oben. Die engere Kapillare (202) mit relativ kleinem Querschnitt geht am Kapillarsprung (203) in die erweiterte Kapillare (204) mit relativ großem Querschnitt über. In der engeren Kapillare (202) fließt die Flüssigkeit in Richtung (a) und in der erweiterten Kapillare (204) in Richtung (b). Eine Flüssigkeit mit hinreichend großer Oberflächenspannung kann den Kapillarstopp (203) nicht überwinden und wird dort angehalten, und zwar auch dann, wenn bei gedeckelter Plattform im Bereich der Kapillarabschnitte (202) und (203) diese beiden Abschnitt auf der Unterseite des Deckels glatt ineinander übergehen. Die in der engeren Kapillare am Kapillarstopp (203) anstehende Flüssigkeit kann zum Beispiel mittels eines Druckstoßes zum Überwinden des Kapillarstopps veranlasst werden.

Figur 8a zeigt in Schrägansicht von oben einen Ausschnitt (211) aus einer Plattform mit engerer Kapillare (212), die am Kapillarsprung (213) in die erweiterte Kapillare (214) übergeht. In einer Seitenwand der erweiterten Kapillare endet die Steuerkapillare (215). Am Ende der Steuerkapillare (215) befindet sich in der Wand der erweiterten Kapillare (214) eine keilförmige Aussparung (216), die vom Boden der erweiterten Kapillare (214) bis zum Boden der Steuerkapillare reicht. In der Steuerkapillare fließt die Steuerflüssigkeit in Richtung (c). Sobald die Steuerflüssigkeit die keilförmige Aussparung (216) erreicht hat, fließt sie mittels Kapillarkraft durch die keilförmige Aussparung in die erweiterte Kapillare (214) und füllt zunächst die erweiterte Kapillare nur im Bereich des Kapillarsprungs (213). Das Ende der Steuerkapillare (215) wirkt wegen der keilförmigen Aussparung (216) nicht wie ein Kapillarstopp. Wenn aus der Steuerkapillare (215) eine hinreichende Menge an Steuerflüssigkeit in die erweiterte Kapillare geflossen ist, berührt die Steuerflüssigkeit die durch den Kapillarstopp (213) in der engeren Kapillare (212) angehaltene Flüssigkeit. Dadurch überwindet die am Ende der engeren Kapillare anstehende Flüssigkeit den Kapillarstopp (213) und beginnt, durch Kapillarkraft in die erweiterte Kapillare zu fließen. Die in Figur 8a dargestellte Anordnung von fluidischen Elementen hat die Funktion eines fluidischen Schalters.

Figur 8b zeigt in Schrägansicht von oben das Ende der Steuerkapillare (215) und die keilförmige Aussparung (216) in vergrößerter Darstellung.

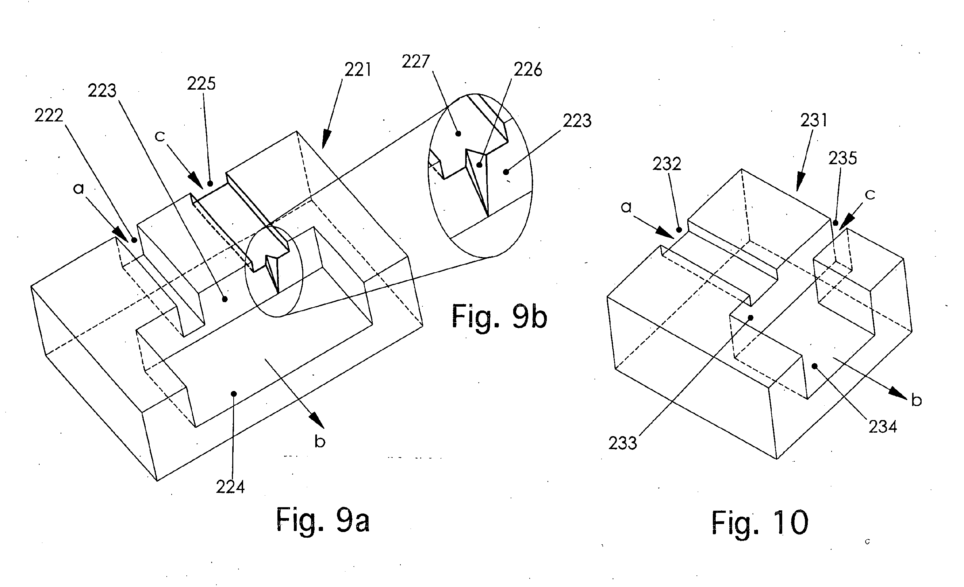

In Figur 9a ist ein Ausschnitt (221) aus einer anderen Ausführung der Plattform in Schrägansicht von oben dargestellt. In der engeren Kapillare (222) fließt die Flüssigkeit in Richtung (a) bis zum Kapillarsprung (223), der als Kapillarstopp wirkt. In der Wand, die den Kapillarsprung bildet, endet die Steuerkapillare (225). Am Ende der Steuerkapillare ist die keilförmige Aussparung (226) angebracht, die am Ende des Bodens der Steuerkapillare beginnt, und die etwa am Boden der erweiterten Kapillare endet. Im Gegensatz zur Aussparung (216) in Figur 8b verläuft die Aussparung (226) geneigt zur Wand, die den Kapillarsprung bildet. Die keilförmige Aussparung (226) wirkt genau so wie die keilförmige Aussparung (216) in Figur 8b.

Figur 9b zeigt in Schrägansicht von oben das Ende der Steuerkapillare (225) und die keilförmige Aussparung.(226) in vergrößerter Darstellung.

In der engeren Kapillare (222) fließt die zu handhabende Flüssigkeit in Richtung (a). Die Steuerflüssigkeit in der Steuerkapillare (225) fließt in Richtung (c). Beide Flüssigkeiten verlassen die erweiterte Kapillare (224) in Richtung (b).

Figur 10 zeigt einen Ausschnitt (231) aus einer anderen Ausführung der Plattform in Schrägansicht von oben. In der engeren Kapillare (232) fließt die Flüssigkeit in Richtung (a) bis zum Kapillarsprung (233), der als Kapillarstopp wirkt. Die Steuerkapillare (235) tritt seitlich in die erweiterte Kapillare (234) ein. Die Steuerkapillare (235) ist genau so tief wie die erweiterte Kapillare (234). Bei dieser Ausführung geht eine Seitenwand der Steuerkapillare (235) glatt in die Wand über, die den Kapillarsprung bildet. Der Boden der Steuerkapillare (235) geht glatt in den Boden der erweiterten Kapillare über. Falls die Plattform im Bereich des Kapillarsprungs gedeckelt ist, geht das Ende der Steuerkapillare (235) mit rechteckigem Querschnitt an drei Seiten glatt in die erweiterte Kapillare über Diese Ausführung der Steuerkapillare hat dieselbe Wirkung wie die Steuerkapillaren, die in den Figuren 8a,b und 9a,b dargestellt sind.

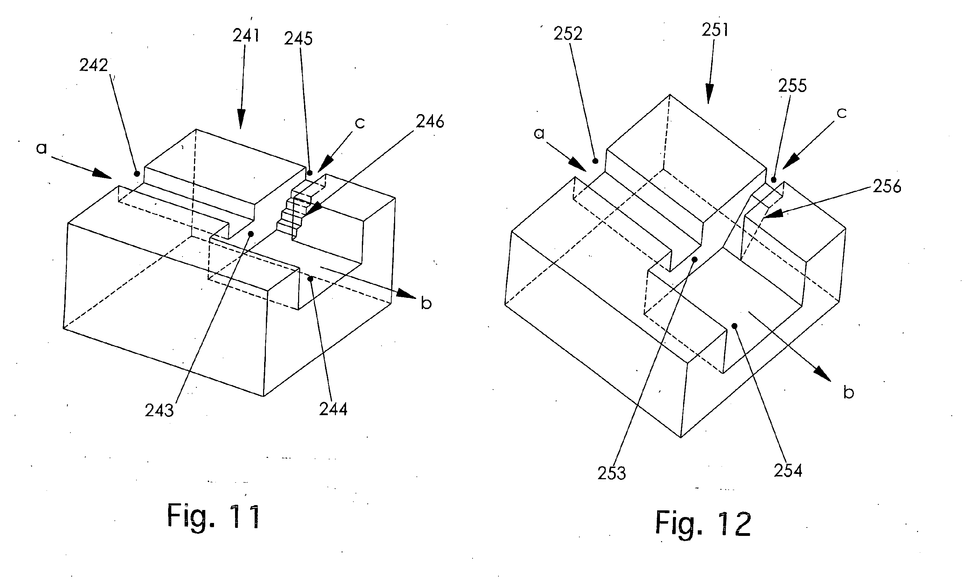

In Figur 11 ist ein Ausschnitt (241) aus einer anderen Ausführung der Plattform in Schrägansicht von oben dargestellt. In der engeren Kapillare (242) fließt die Flüssigkeit in Richtung (a) zunächst bis zum Kapillarsprung (243), an dem sie angehalten wird. In der erweiterten Kapillare (244) fließt die Flüssigkeit in Richtung (b). Der Endbereich der Steuerkapillare (245) ist als Treppe (246) ausgebildet. Die in der Figur 11 dargestellte Ausführung der Steuerkapillare hat dieselbe Wirkung wie die Steuerkapillare, die in den Figuren 8a,b, 9a,b und 10 dargestellt sind.

In Figur 12 ist ein Ausschnitt (251) aus einer anderen Ausführung der Plattform in Schrägansicht von oben dargestellt. In der engeren Kapillare (252) fließt die Flüssigkeit in Richtung (a) zunächst bis zum Kapillarsprung (253), an dem sie angehalten wird. In der erweiterten Kapillare (254) fließt die Flüssigkeit in Richtung (b). Der Endbereich der Steuerkapillare (255) ist als Rampe (256) ausgebildet. Die in der Figur 12 dargestellte Ausführung der Steuerkapillare hat dieselbe Wirkung wie die Steuerkapillare, die in den Figuren 8a,b, 9a,b, 10 und 11 dargestellt sind.

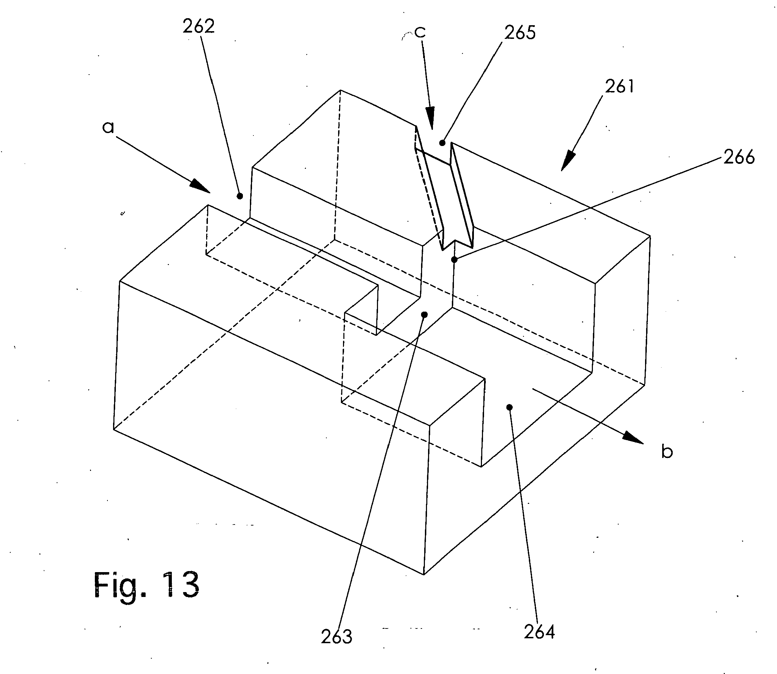

Figur 13 zeigt einen Ausschnitt (261) aus einer anderen Ausführung der Plattform in Schrägansicht von oben. In der engeren Kapillare (262) fließt die Flüssigkeit in Richtung (a) zunächst bis zum Kapillarsprung (263), an dem sie angehalten wird. In der erweiterten Kapillare (264) fließt die Flüssigkeit in Richtung (b). Die Steuerkapillare (265) mündet in die erweiterte Kapillare (264) im Bereich der Kante (266), die aus der Wand des Kapillarsprungs (263) und einer Seitenwand der erweiterten Kapillare (264) gebildet wird. Die Kante (266) endet etwa in der Mitte des Bodenendes der Steuerkapillare. Diese Ausführung der Steuerkapillare hat dieselbe Wirkung wie die Steuerkapillaren, die in den Figuren 8a,b, 9a,b, 10, 11 und 12 dargestellt sind.

Sämtliche in den Figuren 8 bis 13 dargestellten Ausführungen haben die Funktion eines fluidischen Schalters.

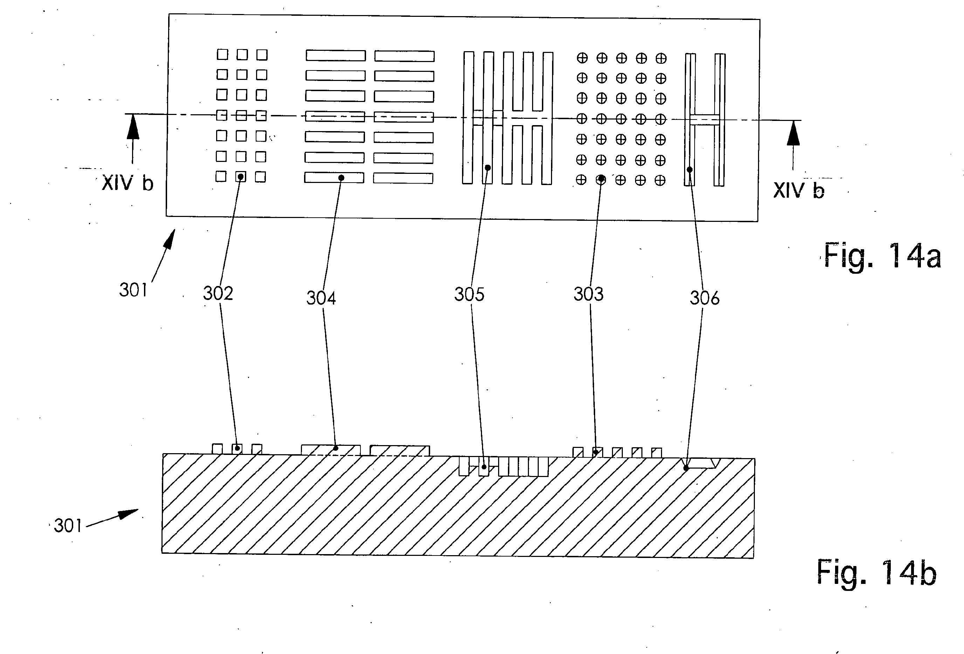

Figur 14a zeigt in Ansicht von oben einen Ausschnitt (301) aus einer bereichsweise mit Mikrostrukturen versehenen Plattform. Die Mikrostrukturen dienen zum Zusammenhalten einer begrenzten Flüssigkeitsmenge.

Figur 14b zeigt einen Querschnitt durch die mikrostrukturierten Bereiche längs der Linie XIV b - XIV b in Figur 14a.

In einem rechteckigen ersten Bereich sind mehrere Reihen von Säulen (302) mit rechteckigem Querschnitt vorhanden. In einem rechteckigen zweiten Bereich sind mehrere Reihen von Säulen (303) mit rundem Querschnitt vorhanden. In einem rechteckigen dritten Bereich sind mehrere zueinander parallel verlaufende Stege (304) vorhanden. In einem vierten Bereich sind Gräben (305) mit rechteckigem Querschnitt vorhanden. In einem fünften Bereich sind dreieckige Gräben (306) angebracht. Die Gräben können unterschiedlich tief sein.

Die Abstände zwischen den Säulen oder Stegen liegen im Millimeterbereich oder darunter. Die Breite und Tiefe der Gräben liegt im Millimeterbereich oder darunter. Die kapillaren Hohlräume zwischen den Säulen oder Stegen sowie die kapillaren Gräben bilden jeweils einen zusammenhängenden Bereich.

Alle fünf mit Mikrostrukturen versehenen Bereiche sind jeweils zum Zusammenhalten einer begrenzten Menge einer Flüssigkeit geeignet.

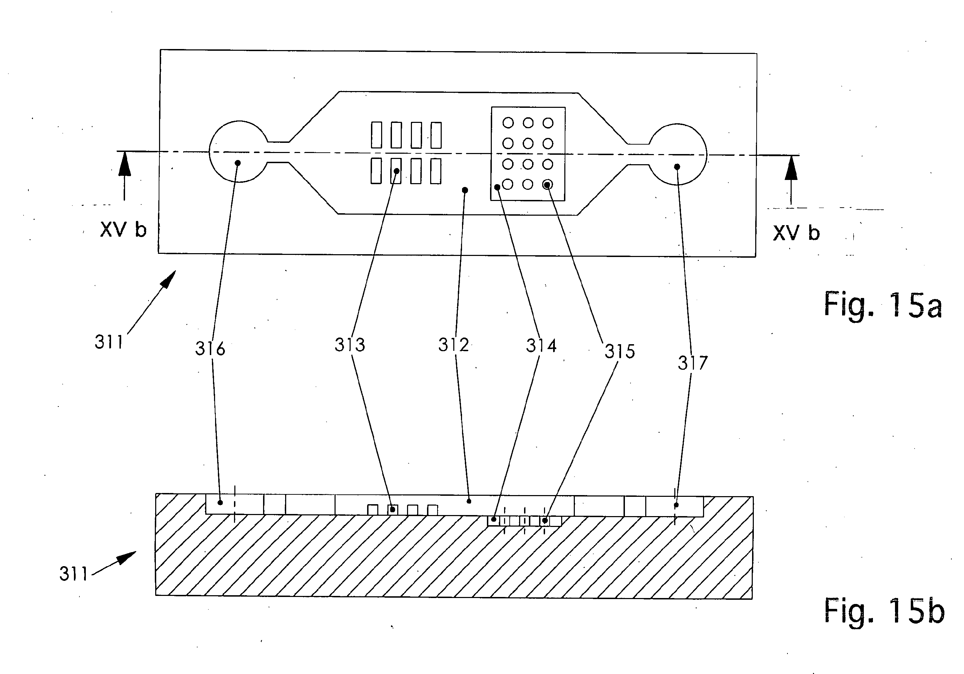

Figur 15a zeigt in Ansicht von oben eine andere Ausführung (311) einer mit Mikrostrukturen versehenen Plattform zum Zusammenhalten einer begrenzten Flüssigkeitsmenge.

Figur 15b zeigt einen Querschnitt durch die mikrostrukturierten Bereiche längs der Linie XV b - XV b in Figur 15a.

Die Plattform ist mit einer Aussparung (312) versehen. In der Aussparung sind in einem ersten Bereich mehrere rechteckige Stege (313) angebracht. In einem zweiten Bereich sind in einer Vertiefung (314) innerhalb der Aussparung mehrere Reihen runder Säulen (315) vorhanden. Die Aussparung umfasst weiter zwei Hohlräume (316) und (317), die zum Einfüllen der zu handhabenden Flüssigkeit oder zum Auffangen der Flüssigkeit dienen, die über die mikrostrukturierten Bereiche hinweggeflossen ist.

Die Abstände zwischen den Säulen oder Stegen liegen im Millimeterbereich oder darunter. Die kapillaren Hohlräume zwischen den Säulen oder Stegen bilden jeweils einen zusammenhängenden Bereich.

Beide mit Mikrostrukturen versehenen Bereiche in der Ausführung (311) sind jeweils zum Zusammenhalten einer begrenzten Menge einer Flüssigkeit geeignet. In der jeweils begrenzten Menge einer Flüssigkeit jeweils vorhandene Reagenzien können in den Bereichen, in denen die begrenzte Menge der Flüssigkeit aufgetragen und zusammengehalten wird, eingetrocknet sein.

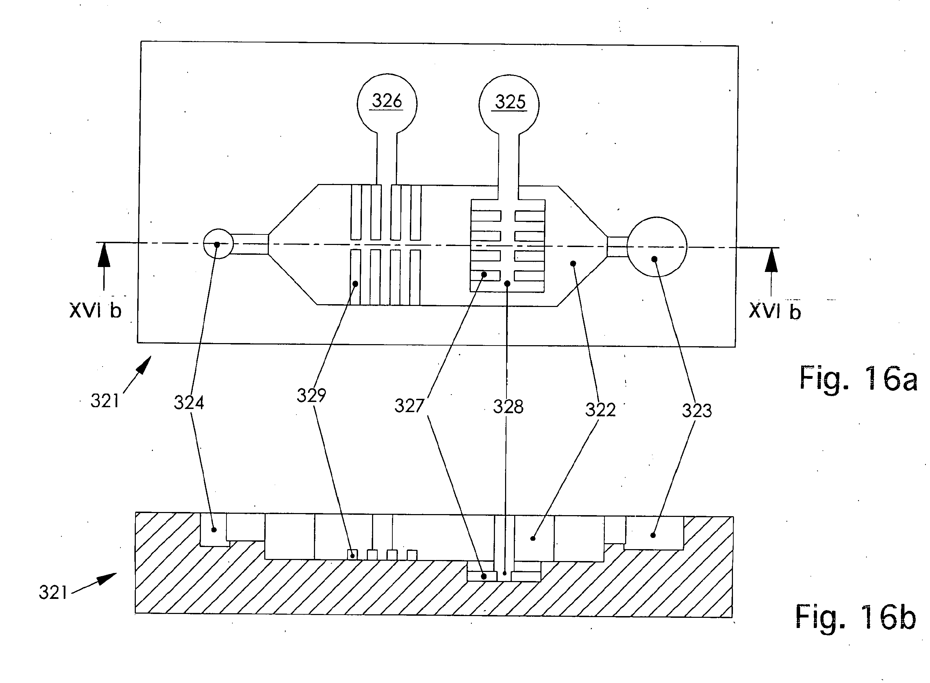

Figur 16a zeigt in Ansicht von oben eine weitere Ausführung (321) einer mit Mikrostrukturen versehenen gedeckelten Plattform zum Zusammenhalten einer begrenzten Flüssigkeitsmenge.

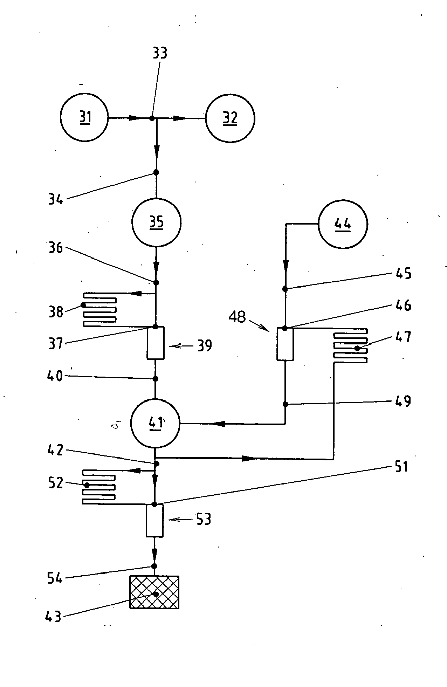

Figur 16 b zeigt einen Querschnitt durch die mikrostrukturierten Bereiche längs der Linie XVI b - XVI b in Figur 16a.

Die Plattform in Figur 16a und Figur 16b ist mit einem durchsichtigen Deckel versehen, der nicht dargestellt ist. Dieser Deckel wird auf der Plattform befestigt, bevor die begrenzte Menge einer Flüssigkeit auf die dafür vorgesehenen Bereiche aufgebracht wird.

Die Plattform ist in einem Bereich mit einer flachen Aussparung (322) versehen, die die Hohlräume (323), (324), (325) und (326) umfasst. In einem ersten Bereich innerhalb der Aussparung ist eine Vertiefung (328) angebracht, in der Stege (327) vorhanden sind, deren Höhe kleiner ist als die Tiefe der Vertiefung.

In einem zweiten Bereich innerhalb der Aussparung sind auf dem Boden Stege (329) vorhanden, deren Höhe kleiner ist als die Tiefe der Aussparung. Der zusammenhängende Bereich zwischen den Stegen (327) ist mit dem Hohlraum (325) verbunden. Der zusammenhängende Bereich zwischen den Stegen (329) ist mit dem Hohlraum (326) verbunden.

Der Deckel enthält vier Öffnungen, die über den vier Hohlräumen (323, 324, 325, 326) liegen.

Beide mit Mikrostrukturen versehenen zusammenhängenden Bereiche sind jeweils zum Zusammenhalten einer begrenzten Menge einer Flüssigkeit geeignet. Diese beiden Bereich sind einzeln über die Öffnungen im Deckel. und die darunter liegenden Hohlräume (325) und (326) für eine Flüssigkeit zugänglich, die nur in die zusammenhängenden Bereiche zwischen den Stegen (327) beziehungsweise (329) fließen soll. In diesen beiden Flüssigkeiten können jeweils Reagenzien vorhanden sein. Die in diese Bereiche zugeführten begrenzten Mengen von Flüssigkeiten können in flüssiger Form und getrennt voneinander erhalten bleiben, oder sie können eingetrocknet werden und getrennt voneinander vorliegen.

Durch die Deckelöffnung über dem Hohlraum (323) kann die zu handhabende Flüssigkeit in den Hohlraum (323) eingefüllt werden. Sie fließt durch Kapillarkraft in die Aussparung (322), reagiert zuerst mit den Reagenzien, die sich zwischen den Stegen (327) befinden, und anschließend mit den Reagenzien, die sich zwischen den Stegen (329) befinden. Die durch die eingefüllte Flüssigkeit aus der Aussparung (322) verdrängte Luft entweicht über den Hohlraum (324) und die darüber liegende Öffnung im Deckel. Sobald die zu handhabende Flüssigkeit die Aussparung (322) gefüllt hat und im Hohlraum (324) angekommen ist, wird die Strömung durch den Kapillarstopp an der Außenseite der Öffnung im Deckel angehalten.

Die eingetretenen oder ausgebliebenen Veränderung einer Eigenschaft der zu handhabenden Flüssigkeit nach deren Reaktion mit den zwischen den Stegen vorhandenen Reagenzien kann in dem Bereich, der stromabwärts der Stege (329) liegt, visuell beobachtet oder photometriert werden.

## Patentansprüche

1. Plattform zum Handhaben einer benetzenden Flüssigkeit, die auf einem mikrostrukturierten Träger
- Hohlräume und ein Kanalsystem zum Transport der Flüssigkeit umfasst, das mit mindestens einem Einlass und mit mindestens einem Auslass versehen ist, und der Querschnitt der Kanäle abschnittsweise in Größe und Form unterschiedlich ist, und
- die Kanäle als Kapillaren ausgebildet sind, die in mindestens einer Richtung quer zur Transportrichtung der Flüssigkeit mindestens abschnittsweise eine Abmessung im Millimeterbereich und darunter haben, und
- die Wände der Mikrostrukturen zumindest bereichsweise benetzbar sind,
- wobei die Plattform folgende weitere mikrostrukturierte Elemente umfasst, die im Transportweg der Flüssigkeit angeordnet sind:
• einen fluidischen Schalter mit einem Kapillarstopp am Übergang einer engeren Kapillare in eine erweiterte Kapillare, und mit einer Steuerkapillare, die an den Kapillarstopp angeschlossen ist, und
• eine Abtrennvorrichtung für einen Flüssigkeitsteilstrom aus einer Dispersion, wobei diese Abtrennvorrichtung
einen Kapillarspalt aufweist, der seitlich an einen Kanal angeschlossen ist.

2. Plattform nach Anspruch 1, wobei die Abtrennvorrichtung als spaltförmige Ableiteinrichtung für einen Teilstrom der zu handhabenden Flüssigkeit ausgebildet ist, die dispergierte Partikel enthält, und wobei der mittels des Kapillarspalts abzweigende Teilstrom nur Partikel unterhalb einer vorgegebenen Größe oder gar keine dispergierten Partikel mehr enthält.

3. Plattform nach Anspruch 1 oder 2, wobei die Höhe des Kapillarspalts mindestens 0,1 Mikrometer und/ oder bis zu 1 Mikrometer beträgt.

4. Plattform nach einem der vorangegangenen Ansprüche, wobei der Kapillarspalt bevorzugt säulenförmige Mikrostrukturen enthält.

5. Plattform nach einem der vorangegangenen Ansprüche, wobei die Plattform auf mindestens einer Seite mikrostrukturiert ist und die mikrostrukturierte Seite von einem Deckel gedeckelt ist und wobei der Kapillarspalt (94) direkt oder über eine Kapillare (95) mit einem Hohlraum (96) verbunden ist, aus dem eine Kapillare (97) führt, die selbst ein offenes Ende zum Entlüften der gedeckelten Mikrostruktur aufweist oder über mindestens einen weiteren Hohlraum an eine Kapillare mit einem offenen Ende angeschlossen ist.

6. Plattform nach einem der vorangegangenen Ansprüche, wobei der Kapillarspalt (94) direkt oder über eine Kapillare (95) mit einem Hohlraum (96) verbunden ist, aus dem eine Kapillare (97) mit einem Kapillarstop am Ende führt.

7. Plattform nach Anspruch 1, wobei
• mindestens eine Kapillare von 5 Mikrometer bis 5 Millimeter breit ist und/oder
• mindestens eine Kapillare von 0,5 Mikrometer bis 2 Millimeter tief ist.

8. Plattform nach Anspruch 1, wobei
• die Plattform mindestens bereichsweise gedeckelt ist und die Mikrostruktur an mindestens einer Stelle eine Verbindung zur Umgebung aufweist.

9. Plattform nach Anspruch 1, wobei
• der Einlass und / oder der Auslass als Hohlraum für eine begrenzte Flüssigkeitsmenge ausgebildet ist.

10. Plattform nach Anspruch 1, wobei
• der Einlass und / oder der Auslass mit einem Anschluss zum Einleiten beziehungsweise Ableiten eines Flüssigkeitsstromes versehen ist.

11. Plattform nach Anspruch 1, wobei
• mindestens ein Hohlraum der Plattform als Analysenkammer ausgebildet ist.

12. Plattform nach Anspruch 1, wobei
• mindestens ein Hohlraum der Plattform als Reaktionskammer ausgebildet ist und ein Reagenz enthält.

13. Plattform nach Anspruch 1, wobei
• mehrere Hohlräume als Analysenkammern oder als Reaktionskammern im Transportweg der zu handhabenden Flüssigkeit hintereinander oder in mehreren Transportwegen angeordnet sind.

14. Plattform nach Anspruch 1, wobei
• mindestens ein Transportweg für die zu handhabende Flüssigkeit mindestens an einer Stelle verzweigt ist.

15. Plattform nach Anspruch 1, wobei die Plattform ein weiteres mikrostrukturiertes Element umfasst, das im Transportweg der Flüssigkeit angeordnet ist, wobei dieses weitere mikrostrukturierte Element eine Dosiereinrichtung für die zu handhabende Flüssigkeit ist, wobei die Dosiereinrichtung
- einen Kapillarstopp und
- eine im Wesentlichen T-förmigen Verzweigung, sowie
- einem Raum aufweist, der die dosierte Flüssigkeitsmenge aufnimmt, und der zwischen Kapillarstopp und Verzweigung angeordnet ist.

16. Plattform nach Anspruch 1, wobei
der fluidischer Schalter mit einer Stoppzeit bevorzugt von 0,5 Sekunden bis 20 Minuten ausgebildet ist.

17. Plattform nach Anspruch 1, die auf einer Seite mikrostrukturiert ist und auf dieser mikrostrukturierten Seite mit einem Deckel gedeckelt ist, wobei der Deckel auf seiner der Mikrostruktur der Plattform zugewandten Seite mikrostrukturiert ist.

18. Plattform nach Anspruch 1, die
• auf mindestens zwei Seiten mikrostrukturiert ist, und
auf mindestens einer mikrostrukturierten Seite von einem Deckel gedeckelt ist, und
• die Kanäle umfasst, die von einer mikrostrukturierten Seite zu einer anderen mikrostrukturierten Seite der Plattform reichen.

19. Plattform nach Anspruch 1, umfassend mindestens eine Kette mit folgenden mikrostrukturierten Elementen:
• einen ersten Hohlraum (15), der mit dem Einlass (11) über eine erste Kapillare (13 mit 14) verbunden ist,
• einen zweiten Hohlraum (21), der stromabwärts des ersten Hohlraumes (15) angeordnet ist,
• einen fluidischen Schalter zwischen dem ersten Hohlraum (15) und dem zweiten Hohlraum (21), der über eine engere Kapillare (16) mit dem ersten Hohlraum (15) und über eine erweiterte Kapillare (19) mit dem zweiten Hohlraum (21) verbunden ist, und der umfasst
- einen ersten Kapillarstopp (17) am Übergang der engeren Kapillare (16) in die erweiterte Kapillare (19) sowie
- eine Steuerkapillare (18), die an die engere Kapillare (16) angeschlossen ist, und die zum ersten Kapillarstopp (17) führt,
• eine Kapillare (22), die am zweiten Hohlraum (21) beginnt und deren offenes Ende als Auslass dient, und die an ihrem offenen Ende mit einem zweiten Kapillarstopp versehen ist.

20. Plattform nach Anspruch 1, umfassend mindestens eine verzweigte Kette mit folgenden mikrostrukturierten Elementen:
• einen Einlass (91), der über eine erste Kapillare (93) mit einem Auslass (92) verbunden ist,
• einen Kapillarspalt (94), der seitlich an die erste Kapillare angeschlossen ist,
• eine zweite Kapillare (95), die den Kapillarspalt (94) mit einem Hohlraum (96) verbindet,
• eine dritte Kapillare (97), die an den Hohlraum (96) angeschlossen ist, und die an ihrem offenen Ende einen Kapillarstopp hat.

21. Plattform nach Anspruch 1, wobei die Plattform einen Bereich zum Zusammenhalten einer begrenzten Flüssigkeitsmenge aufweist, wobei dieser Bereich Mikrostrukturen enthält, die im Wesentlichen senkrecht auf dem Boden des Bereiches.
stehen, und sich zwischen diesen Mikrostrukturen Zwischenräume mit Abmessungen im Mikrometerbereich befinden.

22. Verwenden der Plattform nach Anspruch 1 zum Handhaben und Analysieren von Flüssigkeiten aus dem biologischen, chemischen oder medizinischen Gebiet.
